# EUROPEAN PATENT SPECIFICATION

(11) **EP 2 476 305 B1**
(45) Date of publication and mention of the grant of the patent: **23.08.2017**
(21) Application number: 12151509.2
(22) Date of filing: 18.01.2012
(51) Int. Cl.: A01G 9/24

(54) **Building, in particular greenhouse having a system for absorbing sunlight**
Gebäude, insbesondere Treibhaus mit einem System zum Absorbieren von Sonnenlicht
Construction, en particulier une serre dotée d'un système d'absorption de la lumière du soleil

(30) Priority: 18.01.2011 NL 2006020
(43) Date of publication of application: 18.07.2012
(73) Proprietor: Bode Project- en Ingenieursbureau B.V., 2678 MA De Lier (NL)
(72) Inventor: Van Tilborgh, Johannes, 2678 MA De Lier (NL)
(74) Representative: De Vries & Metman

(56) References cited:
- WO-A1-2005/104819
- DE-U1-202007 017 351
- GB-A- 1 529 021
- P.J. Sonneveld et al: "Fresnel concentrerende systemen voor de tuinbouw", Wageningen UR Glastuinbouw / Nota 604, February 2009 (2009-02), XP002659385, Wageningen (NL) Retrieved from the Internet: URL:http://edepot.wur.nl/5339 [retrieved on 2011-09-15]

## Description

The invention relates, inter alia, to a structure, in particular a greenhouse of the "Venlo" type, according to the pre-amble of claim 1.

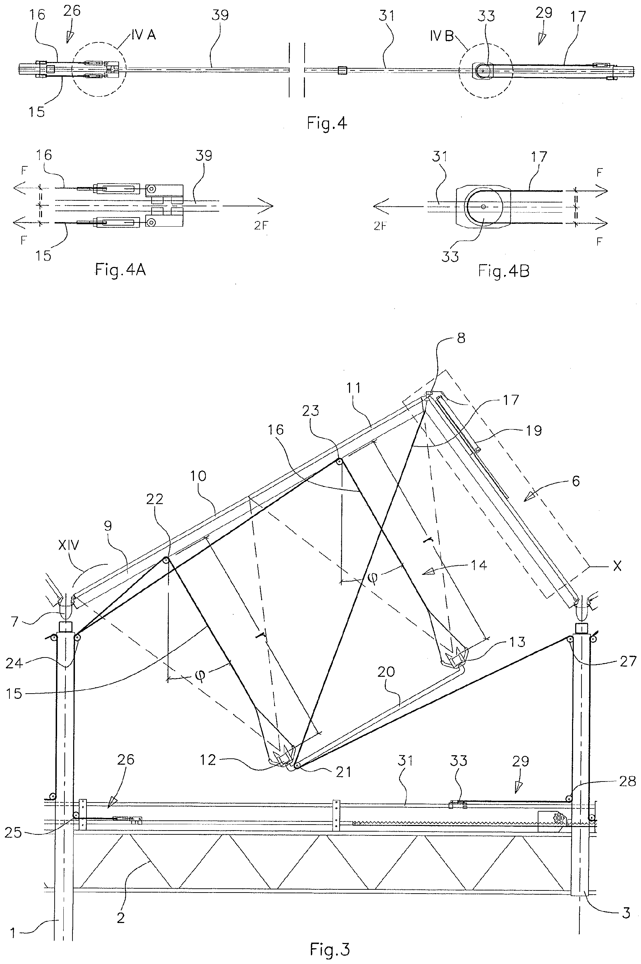

Such a greenhouse is known from the public report of Wageningen UR Glastuinbouw, entitled "Fresnel concentrerende systemen voor de tuinbouw" (≠ Fresnel concentrating systems for use in horticulture), Memorandum 604 of February 2009. Fig. 4.2 thereof shows a moving mechanism comprising cables for moving three absorption elements. Two ϕ-cables are provided, one being connected to the absorption element which is suspended closest to the north deck and which extends toward the north deck, whilst the other ϕ-cable engages the absorption element suspended furthest away from the north deck, extending toward the south deck, where it is provided with a weight. The absorption elements are connected by means of a cable. The drawback of this construction is that the forces in the moving mechanism can run up very high, because the angle between one of the ϕ-cables and the r-cables comes near 180° in the extreme positions of the absorption elements, at which angle an ever smaller part of the pulling force can be utilized for eliminating the force of gravity and the pulling force in the ϕ-cable must become larger and larger, therefore, a large part of which pulling force must be offset by the r-cable.

The object of the invention, according to a first aspect thereof, is to provide a moving mechanism for the absorption elements which exhibits an improved interaction of forces, in particular in the extreme positions of the absorption elements, and which does not take up any space at the north deck.

In order to accomplish that object, the greenhouse according to the invention is according to the characterizing portion of claim 1.

The fact that the absorption elements are connected by a rigid link makes it possible for the ϕ-cable to engage the unit at a lower position, for example near the lower absorption element in the case of two absorption elements, as a result of which the angle between the ϕ-cable of the north deck and the r-cable becomes smaller and consequently the pulling forces in the cables decrease, or the absorption elements can be adjusted to a more extreme position, i.e. nearer the north deck. Preferably, the ϕ-cable effectively engages the north deck at a position such that the angle between the horizontal and said effective direction of engagement is at most 50° and the angle between the r-cables and said effective direction of engagement is at most 140° in all positions of the absorption elements. The force in the r-cables must range between 0 (the absorption elements must not become suspended from the ϕ-cable, as this would interfere with the r-adjustment) and the maximum operating load of the cables, for example 100 kg in the case of a 3 mm steel cable.

In an advantageous embodiment, the ϕ-cable extends from a position near the ridge of the roof to a pulley on the unit of the absorption elements and extends further to a lower location at or below the north deck.

In this way the effective point of engagement on the north deck shifts, in such a manner that an advantageous distribution of forces is maintained. The construction is cheaper and simpler than, for example, having a single ϕ-cable movably engage the north deck, which is possible, of course. Furthermore, said "double" construction of the ϕ-cable has the advantage that one cable part can be positioned above the rigid link and the upper absorption element at all times, with the other part positioned therebelow, so that the upper absorption element does not impose any restrictions.

It is advantageous if the ϕ-cable extends from the unit to a pulley on a column under the north deck, because the column can easily take up the forces and the cable can be guided further from the column to a drive unit.

For the capture of light in the absorption elements it is advantageous if the absorption elements are arranged to be at all times directed towards the centre or the line of symmetry of the lens, wherein the absorption elements are each individually attached to one of the r-cables and are rotatably connected to the rigid link between the absorption elements.

It is very advantageous if the drive units for the r-cables and the ϕ-cables are mounted on respective horizontal trusses or other horizontal structural parts. This makes it possible to use existing techniques, since the drive units for air windows, light screens and the like are generally also mounted on trusses. The air windows are preferably sash windows, whose drive units are mounted on the north deck, so that the trusses are available for mounting the drive units for the r- and ϕ-cables thereon.

The ϕ-cable may be diverted 180° around a pulley at the location of the horizontal truss, which pulley is movable parallel to the ϕ-cable and which is connected to the associated drive unit. In this way the adjustment travel is halved, which makes it possible to use a double ϕ-cable, as described in the foregoing, without this leading to an overly large adjustment travel on the horizontal trusses or other horizontal structural members.

In case a number of horizontal trusses are provided in a direction parallel to the ridge of a roof, it is advantageous if the absorption elements at at least a number of the trusses, and preferably at every individual truss, are provided with r-and ϕ-cables and associated drive units on the horizontal trusses, wherein the drive units of a number of horizontal trusses are interconnected and are adjusted by means of a single drive motor.

A simple embodiment is one in which the drive units on the horizontal trusses are provided with gear racks which are connected to the associated cables, and with pinions which mate with the associated gear racks and which are interconnected by a torsion-rigid shaft which can be rotated by the associated drive motor.

In case the greenhouse comprises a number of adjoining roof sections, it is advantageous if the drive units for the r- and ϕ-cables are interconnected.

In this way a single drive motor, in particular an electric motor, can drive an entire field of movement mechanisms, with the drive unit preferably being disposed near the centre of said field so as to minimize torsional forces and the like.

It is advantageous if the ratio of the width of the Fresnel lenses in the direction between the gutter and the ridge to the focal line (focus) distance is at most approximately 0.85, and preferably ranges between approximately 0.66 and 0.82. In the case of a larger ratio, the efficiency (the annual amount of incident light on a defined focal line width : the amount of incident light on the Fresnel lens) will decrease rapidly. Also the average transmission of (diffuse and direct) light will decrease if a larger ratio is used. In the case of a smaller ratio, the "top part" or "top piece" (the space above the horizontal truss) of the greenhouse will be relatively too large, and the absorption elements will have to make large oscillating movements. The need for a higher top part could also be obviated by using more and smaller Fresnel lenses, but in that case the number of focal lines, and thus the number of absorption elements, will increase, resulting in a higher cost price. In addition, the absorption elements will be very small and vulnerable in that case.

The height of the top part of a Venlo greenhouse is determined by the length of a top column, i.e. the distance between the truss and the gutter. In conventional greenhouses, the gutters are supported on very short top columns about 15 - 20 cm above the truss. In the situation in which two Fresnel lenses are used between the gutter and the ridge of the south deck (and thus two absorption elements), the ratio: length top column : length focal distance preferably ranges between 0.6 and 1.1. In a very specific embodiment, said ratio is 1.65 : 1.875 = 0.88. The length of the top columns above the truss is in that case 165 cm, therefore. In that case there is sufficient free "empty" space above the truss for accommodating the moving mechanism and the absorption elements and to allow them to move freely. Seen in the direction from the truss downward, the greenhouse can be a "conventional" greenhouse again, which can be provided with all the standard facilities.

Preferably, the angle of the south deck with respect to the horizontal ranges between 10° and 40°, preferably (in the Netherlands) it is about 30° (90° minus the maximum altitude of the sun, which is 60° in the Netherlands). In a more southern country, with a maximum altitude of the sun of about 70°, this would be 20°, therefore, whilst the north deck is oriented approximately perpendicular thereto. The energy output is maximal in that case, and the light distribution on the ground is uniform, i.e. there is hardly any, if any, disturbance by direct incidence of sunlight through the north deck in midsummer.

In a versatile embodiment of the greenhouse, the absorption elements are provided on either side thereof with light diffusing elements, such as diffusing glass or Fresnel lenses for the purpose of daylight control.

In this embodiment it is possible to utilize the absorption elements as stepless daylight control means by positioning the absorption elements higher or lower than the focal line. Part of the light beam will pass the absorption elements in that case. This will normally lead to light and dark streaks on the ground, but the light-diffusing elements will diffuse the light so that a more or less even lighting of the bottom will take place.

Further features and advantages of the invention will ensue from the description below with reference to the drawings, which schematically show an embodiment of the invention.

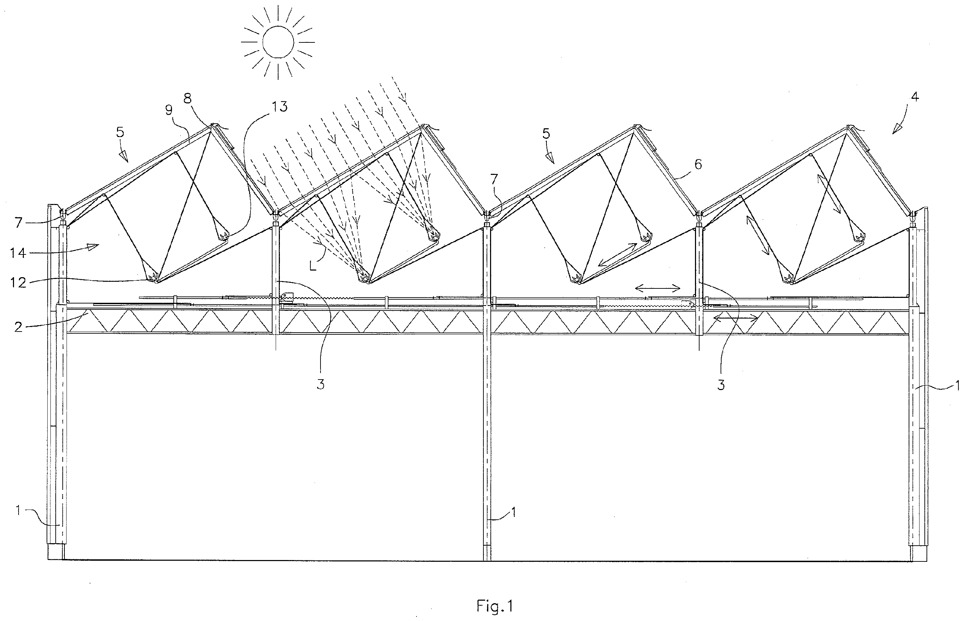

Fig. 1 is a cross-sectional view of a greenhouse, which is small for the sake of clarity.
Fig. 2 is a schematic, perspective illustration of the operating mechanism for the absorption elements from the greenhouse shown in Fig. 1.
Fig. 3 is a larger-scale view of a part of the greenhouse of Fig. 1.
Fig. 4 is a top plan view of the drive system for the operating mechanism of Figs. 2 and 3.
Figs. 4A and 4B are larger-scale details IVA and IVB of Fig. 4, which function to illustrate the interaction in the drive system of the cables of the moving mechanism of the absorption elements of the greenhouse.
Figs. 5, 6 and 7, 8, respectively, are views corresponding to Fig. 3, in which the operating mechanism and the drive system are shown in two different positions.
Fig. 9 is a perspective view of a part of the drive system for a number of moving mechanisms in several roof sections of the greenhouse of Fig. 1.
Figs. 10 and 11 are larger-scale views of the detail X in figure 2 in two different positions thereof.
Fig. 12 is a perspective view of a number of air windows of Fig. 10 and the moving mechanism therefor.
Fig. 13 is a very schematic perspective view of two Fresnel lenses with the associated absorption elements in a position as they are built into a greenhouse.
Fig. 14 is a larger-scale sectional view according to the detail XIV in Fig. 3.
Figs. 15A, B, C are larger-scale views, in top plan view, sectional view according to the line C-C in Fig. 15A, and front view, respectively, of the lens element A of Fig. 13.
Figs. 16A, B, C are views corresponding to Fig. 15 of the lens element B of Fig. 13.
Figs. 17A, B are larger-scale views of the details XVII A and B in Fig. 15.
Fig. 18 is a large-scale view of the detail XVIII, which further shows the way in which a number of lens elements are stacked together.
Fig. 19 is a perspective, exploded view of a part of the absorption element of Fig. 3.
Fig. 20 shows the electric diagram of the PV-cells of the absorption element of Fig. 19.
Fig. 21 is a larger-scale view of the detail XXI in Fig. 19.
Fig. 22 is a larger-scale cross-sectional view of another embodiment of the absorption element according to the invention.
Fig. 23 is a large-scale, partially cut-through perspective view of a suspension of an absorption element as shown in Fig. 3.
Fig. 24 is a view of the greenhouse comparable to Fig. 3, in which a sensor for a sun tracking system is provided.
Fig. 25 is a schematic representation of the operation of the sensor of Fig. 24.

The greenhouse according to this embodiment of the invention is constructed by means of a number of vertical columns 1 disposed on the ground and horizontal trusses 2 attached thereto, as well as auxiliary columns 3 supported by the trusses. Said columns and said trusses support a roof structure 4 comprising a number of roof sections configured as asymmetric sections each comprising a south deck 5 and a north deck 6. When using the terms "south deck" and "north deck", it is assumed that the greenhouse is situated on the northern hemisphere, where the sun is in the south. On the southern hemisphere, the situation will be exactly the reverse and the terms "north" and "south" must be read the other way round.

Said south decks 5 and north decks 6 extend between respective gutters 7 at the location of a column 1 or 3 and a higher ridge 8. Glazing bars 9 form the connections between the gutters 7 and the ridges 8, supporting glass panes yet to be discussed, which form the roof covering. The greenhouse roof is a so-called Venlo roof: except for the aluminium glazing bars, the gutter and the ridge, the roof does not comprise any structural elements (unlike a wide span greenhouse, which comprises trusses spaced apart by a distance of twice the dimension of a roof section and purlins extending transversely to the glass. The greenhouse that is shown is in principle designed to have its south decks 5 face southward 150° ≤ azimuth ≤ 210°; if azimuth south = 180°). The asymmetric design has the advantage of a maximized energy output (a larger greenhouse area takes part) and a more uniform light distribution at plant height (no strips of light through the north deck).

The greenhouse roof in this case consists of one 4 m wide roof section (centre distance between gutters 7), with the south deck being inclined at an angle of 30° and the south deck having a gutter-to-ridge length of about 3.13 m. In said section two linear (in cross-sectional view) Fresnel lenses 10, 11 are provided (see Fig. 3), each having a width of approximately 1.54 m (seen in the direction between the gutter and the ridge). The Fresnel lenses 10, 11 are designed to have a focal line distance of 1.875 m. Each Fresnel lens cooperates with an absorption element 12, 13, respectively, to be placed in the focal line of the lens, which element can be moved in two degrees of freedom for tracking the focal line during the sun's movements.

The width of the lens: focal distance = preferably at most 0.85 (1.54 : 1.875 = 0.821). In the case of a larger ratio (for example 1.05), the efficiency (the annual amount of incident light on a defined focal line width: the amount of incident light on the lens) rapidly decreases. Also the average (diffuse and direct) light transmission decreases in the case of a larger ratio.

In the case of a smaller ratio, the "top part" or "top piece" (the space above the horizontal truss 2) of the greenhouse will be relatively too large, and the absorption elements 12, 13 will have to make large oscillating movements. The higher top part could also be prevented by using more and smaller lenses, but in that case the number of focal lines, and thus the number of absorption elements, will increase, resulting in a higher cost price. In addition, the absorption elements will be very small and vulnerable in that case.

The selected geometry is more or less an optimization of the construction (roof span, glass pane and glazing bar dimensions not too large), the energy yield (a lens which is not too strong) and costs (not too many lenses and thus costs of absorption elements). Also the spacing between the north deck 6 and the path of the uppermost absorption element is a technically usable spacing (it will be proportionally smaller as more absorption elements are used, whilst the construction will at all times retain a minimum or practical dimension).

Seen in the longitudinal direction of the roof, i.e. parallel to the ridge 8, the linear Fresnel lens 10, 11 might have an infinite length, in practice said length is limited by the width of the panes, i.e. the centre distance of the glazing bars (in this case 1.25 m, but this dimension could also be 1.67 m, for example). It will be easiest, for that matter, if the dimension of the roof section (centre distance of the horizontal trusses 2) is a multiple of the centre distance of the panes: in this case section dimension 5.0 : 1.25 = 4 panes in one section.

As already said before, the absorption elements 12, 13 must be provided with a moving mechanism 14 for keeping the absorption elements in the focal line of the Fresnel lenses when the position of the sun changes. The position of the sun changes both during the day (azimuth) and during the year (the sun's altitude).

Each moving mechanism 14 comprises cables, with two types of cables being used, viz. so-called r-cables 15, 16, which extend from the absorption elements 12, 13 to the centre of the associated lens 10, 11, and a so-called ϕ-cable 17, which extends from the absorption elements 12, 13 to the north deck 6. The light capture of said cables is minimal, and their direction can be changed by means of pulleys, making it readily possible to realise a compact construction, and that at relatively low costs. Because of the use of the cables, the absorption elements 12, 13 have two degrees of freedom meant as polar coordinates (r, ϕ) with the centre of (one of) the lenses as the co-ordinate system (0, 0).

In connection with the asymmetric roof, there is only little constructional space at the north deck 6 for "pulling down" the upper absorption element (the ϕ-adjustment). In addition, also the moving mechanism 18 for an air window 19 must be built in at this location.

It is in many respects advantageous, therefore, not to pull the upper absorption element 13 (the one at the north deck 6) aside, but push it up from below. It can be pushed (practically) against the north deck 6 in that case. The ϕ-cable 17 is therefore not attached to the upper absorption element but to (or near) the lower absorption element 12 (in the situation in which two absorption elements are used). This means that a concession is made as regards the capture of light and the costs, because a connection 20 between the two modules must be a rigid link in that case, for example a push rod or a push tube instead of a pull cable. In addition to that, a stabilisation cross bond 54 must be provided between the upper absorption element 12 and the lower absorption element 13 for each connected unit of the absorption elements (preferably in the centre of the connected unit), because stabilisation is no longer ensured by the force of gravity (the upper absorption element 13 "stands" on the lower absorption element 12 via the push rod 20 and is thus in principle unstable), as it was in the prior art, in which the lower absorption elements were suspended below the upper absorption elements via pull wires.

Another problem is that it is in fact not possible to find an adequate "pull point" for the ϕ-adjustment because of the required r-adjustment of the absorption elements 12, 13. If the ridge 8 is chosen as the location for the pulling point (i.e. high), the pulling force in at least the r-cable 15 may become negative (i.e. a pressure force, because the absorption element 12 is pulled up by the ϕ-cable) at low positions of the absorption element 12, 13. If a location near the gutter 7 is chosen (i.e. low), the pulling force in the cables 15 and 17 may become too large at high positions of the absorption element 12, 13, because the angle between said cables will become too large. In addition, it is physically impossible in combination with the use of pull cables to make this angle larger than 180°, which would mean that an entire area cannot be reached. In fact an adjustable pulling point is needed, therefore, approximately corresponding to the r-adjustment. As already said before, there is little space available for this at the north deck 6, but it is also complicated to realise from a technical point of view. Add to this the fact that the wire in question must not cross the absorption element 13 in some positions: it must therefore remain either above the push rod at all times or below the push rod 20 at all times.

This has been solved by realising a fictitious moving "pulling point" along the north deck 6 at the location of the lower absorption element 12, using a pulley 21, which "pulling point" will at all times be located at a reasonably optimum position in relation to the direction of movement that is desired at that point in time. The forces in the cables 15 - 17 will thus remain within bounds at all times and will at no point become negative, the cable portions of the ϕ-cable 17 will not cross the module at any time (the upper cable portion will be positioned above the push rod 20 at all times, the lower cable portion being positioned therebelow at all times, the average fictitious cable and the resulting pulling force will at all times be oriented approximately parallel to the push rod 20, +20° above up to -15° below the push rod in this embodiment).

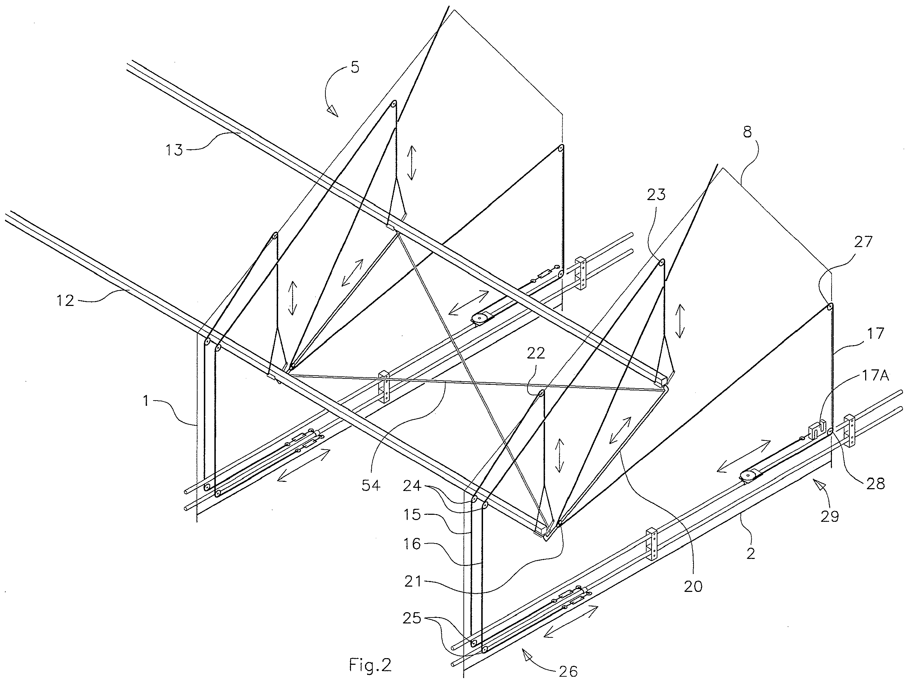

As is shown in Figs. 2 and 3, for example, the r-adjustment takes place "anti-clockwise" and the ϕ-adjustment takes place "clockwise": as a result, the various cables 15, 16 and 17 will not encounter one another. Via pulleys 22, 23 disposed under the south deck 5, in the centre of the lenses 10, 11 in question, the r-cables are guided to their own pulley 24 on the upper side of a column 1, 3, then to their own pulley 25 on the column near the truss 2 and subsequently to a drive unit 26 mounted on the truss 2. The r-adjustment of one absorption element 12 is located on one side of the "truss" bar 9 and the column 1, 3 ("in front"), the r-adjustment of the other absorption element 13 is located on the other side of the "truss" bar 9 and the column 1, 3 ("behind"). These cables 15, 16 thus do not encounter one another, either. As a result, the forces from the cables 15 and 16 also engage symmetrically around the centre of the pull/push tube 39, so that the pull/push tube is subjected to minimal additional moments (Fig. 4A).

As already said before, the ϕ-cable 17 is guided from the ridge (or from a location near the ridge) to the pulley 21 near the lower absorption element 12, and from there to a pulley 27 near the upper end of the "right-hand" column 3, 1, then to a pulley 28 on said column, near the truss 2, and subsequently to a drive unit 29 on the truss 2. The ϕ-adjustment is located in the part above the absorption element 13 "behind" the column 3 and in the part below the absorption element 13 ("in front"), i.e. on the other side of the "truss" bar than the r-adjusting cable 16 of the absorption element 13, and consequently said cables do not encounter one another, either, not even at the point where they cross one another. In this embodiment the pulley 21 is disposed in the centre of the push rod 20, straight below the truss bar 9. The minimal forces parallel to the absorption element 12 caused by the slope of the ϕ-cable offset one another, because the upper side and the lower side of the ϕ-cable extend to different sides of the truss bar 9. Undesirable resulting forces are thus minimized.

Since the cables 15 - 17 are driven by the aforesaid drive units 26, 29 on the truss 2, this means that the absorption elements 12, 13 are suspended from the cables 15, 16 at intervals equalling twice the section dimension (because the drive units are present on the truss that is bound by the section dimension). As described above, the section dimension must therefore be a multiple of the centre distance of the bars 9, after all, the cables must be suspended from some part, and in the case of a Venlo type roof the bar that carries the pane is the only construction material in the roof. The bars 9 above the trusses 2 are therefore preferably weighted (for example by means of a steel U-section surrounding the bar or by means of a strip in the bar, whilst the circumference, and thus the resulting shade, is the same as that of the other bars).

As already said before, the cables must exert a (small) pulling force at all times (positions "to the left" of the vertical, suspended r-cables 15, 16 cannot be reached, therefore). Pressure forces are not possible. Excessive pulling forces are undesirable in connection with a desired minimum cable thickness (at 3 mm the maximum pulling force is about 100 kg, for example). The cables 15 - 17 are tensioned by the force of gravity on the one hand (the weight of the absorption elements 12, 13) and by the forces delivered by the motors on the other hand. Because the two motors may act counter to each other (if incorrectly controlled), a cable force limiter is incorporated in one of the cables 15 - 17 for each hoisting section (also see below).

The cables 15 - 17 are prefabricated to the desired length, preferably with cast-on eyes and rolled-on threaded ends. Readjustment in situ takes place by means of muff chucks (adjusting screws) provided on the aforesaid threaded ends at the ends of the wires.

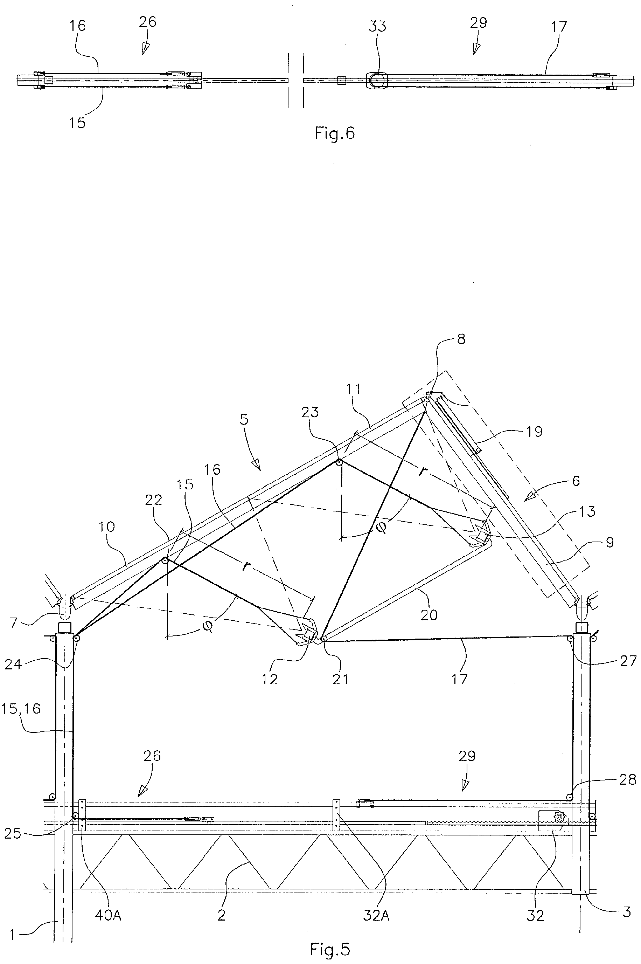

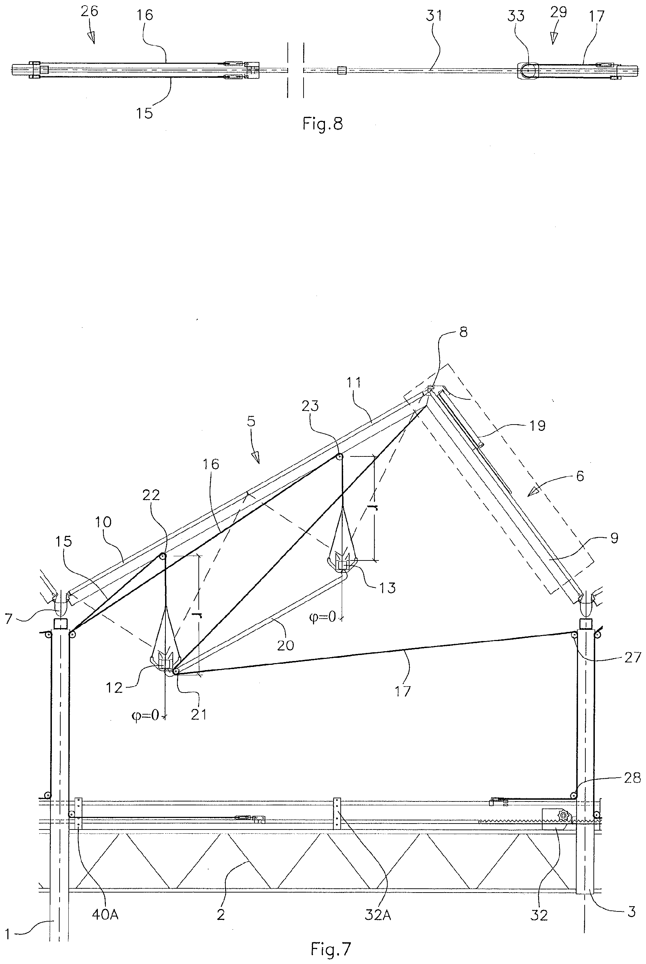

As already said before, r is realised by means of the drive unit 26, whilst ϕ is realised by means of the drive unit 29. Opting for this construction achieves that the absorption elements 12, 13 will be oriented to the centre of the respective Fresnel lenses 10, 11 at all times: the upper surface of the absorption element is thus at all times optimally oriented (= perpendicular) relative to the light cone it is to capture/stop. Figures 3, 5 and 7 show three positions of the absorption elements 12, 13 and the associated moving mechanism 14 corresponding to three positions of the sun. Said positions correspond, for example, to: (Figs. 3, 4: midsummer around noon for all orientations of the greenhouse), (Figs. 5, 6: in the spring or the autumn around noon for all orientations of the greenhouse) and (Figs. 7, 8: midsummer early in the morning with a greenhouse orientation slightly south-west, or late in the evening with a greenhouse orientation slightly south-east).

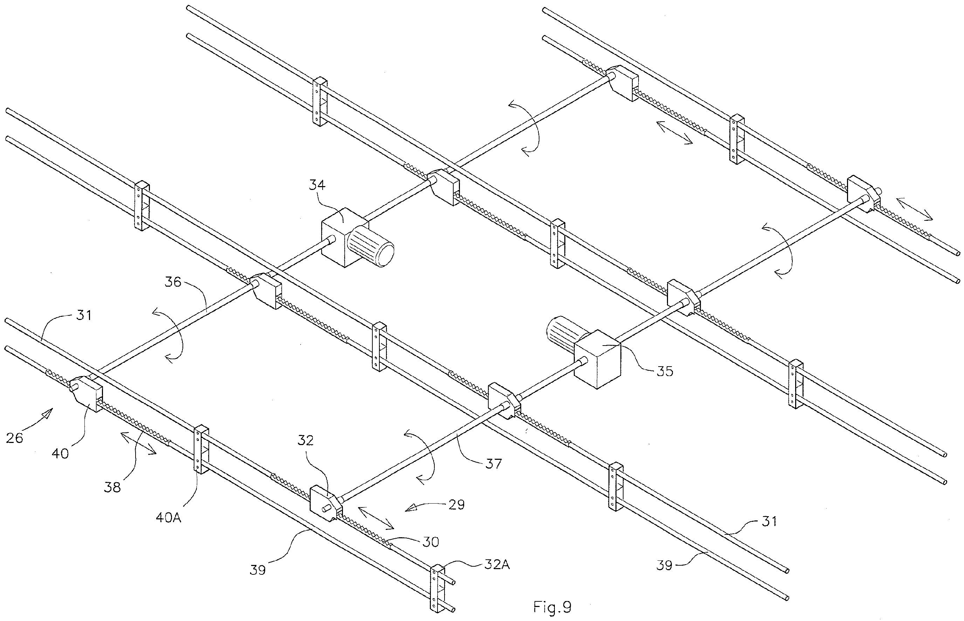

Because of the presence of the pulley 21 at the location of the lower absorption element 12, the ϕ-cable 17 must travel twice as far for effecting the same movement of the absorption elements 12, 13 than in the situation where the cable would simply run to the north deck 6. This is undesirable in connection with the length and the stroke of the drive unit 29. Said drive unit comprises a gear rack 30 extending in the longitudinal direction over the truss (Fig. 9), which gear rack can be moved forward and backward by means of a pinion (not shown). Connected to the gear rack is a pull/push tube 31. The pinion is accommodated in a rack-and-pinion housing 32, and the adjusting stroke is bound to a maximum on account of the distance between said rack-and-pinion housing 32 on the truss 2 and the bearing housing 32A. For that reason an additional pulley 33 is provided on the pull/push tube 31 in the illustrated embodiment, which offsets said transmission reduction: the pulley 33 preferably has a horizontal orientation, with a diameter approximately the width of the column 1, 3 (i.e. axis pulley 33 = centre pull/push tube 31), as a result of which minimal additional moments are applied to the pull/push tube 31.

The drive units 26, 29 comprise drive motors, such as electric motors 34, 35. Although individual motors are protected by limit switches at the extreme positions of the gear racks 30 and 38, and the positions of the motors are known and protected if the control software functions correctly, there is a possibility in some situations, in case of a failure, that a combination of motor positions will occur which may cause irreparable damage as a result of the motors 34, 35 acting counter to each other. A pulling force sensor 17A is provided in at least one of the cables 15 - 17 (preferably at a fixed position, such as in this case the end of the ϕ-cable 17 that is fixed to the column 3), which sensor will turn off both motors if the cable forces run up too high. One sensor per hoisting section (i.e. 2 motors) suffices, because it is assumed that if the force in one cable runs up too high, it will run up too high in all the cables. In Fig. 2 the sensor 17A consists of an S-shaped force sensor provided with a strain gauge mounted between the column 3 and the adjuster sleeve. Said location at the end of the cable 17 is convenient, because it is a non-moving and non-rotating cable point and because it is positioned as low as possible, so that the electrical connection for the sensor 17A is easy to realise.

The moving mechanism 14 is quite similar as regards the drive system to the mechanisms that are usual in greenhouse farming (for example for operating screen installations or for operating hinged air windows). It is a mechanism which must realise two degrees of freedom, and consequently it actually consists of two drive units. The two drive units are so-called truss rail drive units, which each comprise:
- a shaft 36, 37 extending in the longitudinal direction of the greenhouse (i.e. parallel to the ridges/gutters),
- each shaft 36, 37 is driven by the associated electric motor 34, 35 (which is preferably located in the centre of the shaft),
- the shaft 36, 37 drives a right-angled transmission (the pinion in the gear rack 30, 38, respectively), at locations spaced apart by a distance equalling two section dimensions (in this case 5.0 m),
- said shafts 36, 38 thus operate several sections (for example four or five on one side of the motor 34, 35, and also four or five on the other side of the motor, i.e. a greenhouse length of 2x (4 or 5) x 5 m = 40 to 50 metres greenhouse length,
- said gear racks 30, 38 in turn drive so-called pull/push tubes 31, 39 disposed in back-and-pinion housings 32, 40 and bearing housings 32A, 40A on the truss 2 (on one side of the shaft said tubes are loaded in tension, on the other side of the shaft there are loaded in compression, hence the name pull/push tube),
- said pull/push tubes 31, 39 can operate several roof sections to the left and to the right of the shaft simultaneously (for example three to four roof sections on one side of the shaft and three to four roof sections on the other side of the shaft, i.e. a greenhouse width of 2x (3 or 4) x 4 m = 24 to 32 metres greenhouse width).

In this example, 40 x 24 to 50 x 32 = 960 to 1600 m2 of greenhouse can be operated with each motor (for each degree of freedom) in this way. For cost reasons, the sections must be as large as possible. The size of the sections is limited by the desired accuracy of the system. This contradicts with the possible construction tolerances of the greenhouse, differences in thermal expansion of the greenhouse and the push/pull tubes, torsion in the drive shaft, etc. In connection therewith, the operated areas must as "square" as possible from the viewpoint of the motor; i.e. the motor as much as possible in the centre of a hoisting section. In practice the sections will be about 1,000 to 2,000 m². Said proportions reasonably correspond to available shaft thicknesses and available motor torques in relation to that which is usual in greenhouse farming.

Finally, it can be noted that the entire path of the focal line can be described also with a horizontal adjustment of the push/pull tubes 31, 38 on the truss 2 of approximately half the section dimension. This is advantageous, because this makes it possible for the pull/push tube to be supported by a bearing housing at a location halfway the roof (in the centre), without coming into conflict with the cables. Nor will there be a problem with pull/push tubes "projecting through the side wall" at the edges of the greenhouse in that case.

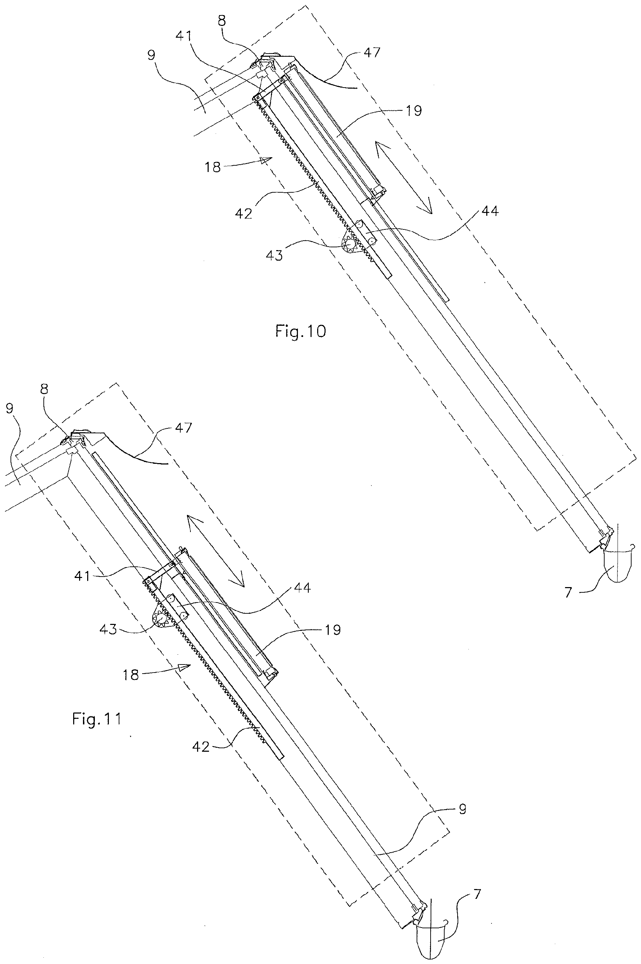

As is clearly shown in Figs. 10 and 11, the air windows 19 in the north deck 6 are configured as sash windows in the illustrated embodiment rather than as the "cantilever" air windows used in conventional greenhouses. Said sash windows have the advantage that they prevent the occurrence of a shadow from an open air window cast on the adjacent south deck 5; after all, the sash window 19 does not project and remains within the plane of the north deck. Furthermore, there is no need for an operating mechanism for the air window 19 that projects far into the interior of the greenhouse. The operating mechanism 18 for the sash window can be built into the roof surface in a very compact manner, so that the absorption elements 13 and the operating mechanism 14 therefor will not be impeded thereby.

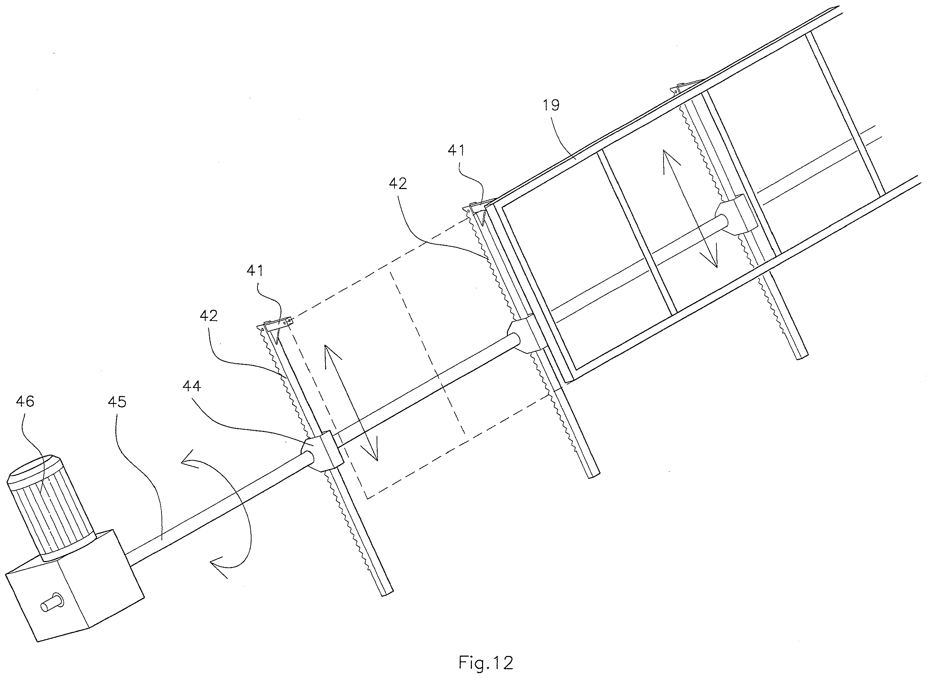

Fig. 12, too, shows a number of air windows 19 and the operating mechanism 18 therefor. The air windows 19 are connected, via connecting means 41, to gear racks 42 provided under the north deck 6, which can be moved between the ridge 8 and the gutter 7 by means of a pinion 43 (Figs. 10, 11) accommodated in a rack-and-pinion housing 44. In this embodiment, the gear racks 42 and the pinions 43 are provided at intervals of two glazing bars. The pinions 43 in a roof section 6 are interconnected by means of a shaft 45, which can be rotated by means of an electric motor 46, and which can thus operate all the windows 19 in the same north deck 6. The driving system of the sash air window may alternatively also comprise pulling cables that wind onto a drum in the case of a sufficiently steep north deck slope.

Figs. 10 and 11 further show that rain cover 47 is provided on the ridge 8 above the openings for the sash window 19. The rain cover is preferably transparent because of the minimal light capture and it prevents rain from entering the greenhouse via a (partially) open air window 19. The rain cover 47 is preferably made of plastic material so as to minimise the thermal braking effect. Venting the greenhouse from the ridge 8 functions adequately, but controlling the ventilation is difficult, in particular in the case of small openings because of the strong draught effect. The rain cover 47 provides better controllability because the passage is no longer determined by the opening between the upper side of the sash window 19 and the ridge 8, but by the opening between the outer side of the sash window 9 and the rain cover 47. Because of the special shape of the rain cover, said passage becomes only slightly larger in the first part of the opening movement of the window, so that a much finer control can be realised. The rain cover 47 functions as part of a control valve in that case, with the distance between the rain cover and the air window in a direction perpendicular thereto determining the air passage. The illustrated curved shape means that the opening becomes only slightly larger during the first part of the movement of the air window 19 and quickly becomes larger after the first critical beginning, so that the rain cover's function is gradually lost.

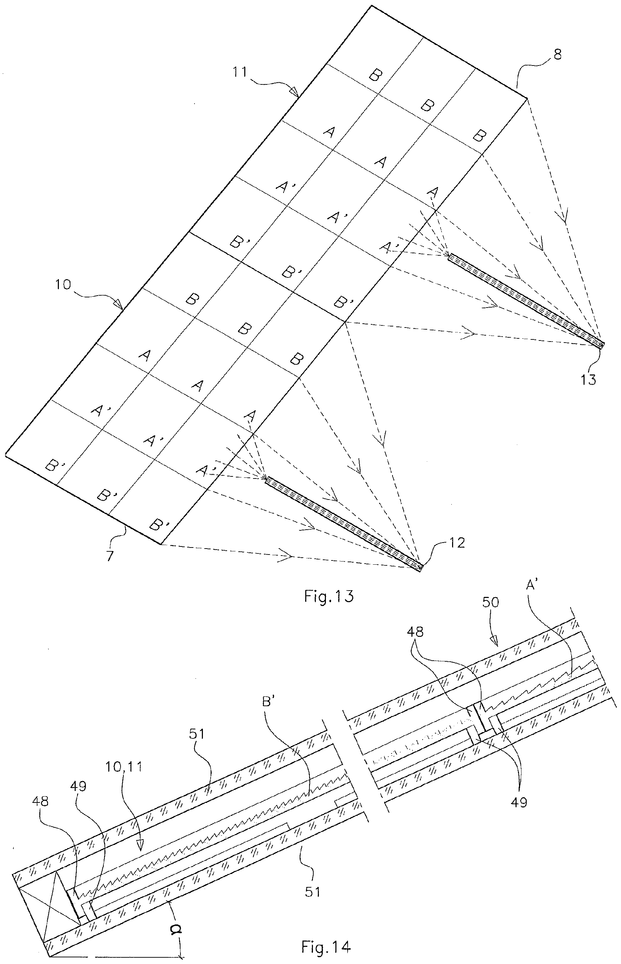

As already mentioned before and as shown in Figs. 13, two Fresnel lenses 10, 11 are disposed between the gutter 7 and the ridge 8 of each south deck 5. The Fresnel lenses 10, 11 are provided with a profile on one side, for example in the form of grooves and serrations, see Fig. 14, for example. The lens is designed so that the Fresnel profile must be oriented upwards: this leads to a higher efficiency of the lens and a higher (direct and diffuse) light transmission. This can be explained in that the light passes a plane of refraction twice (not perpendicularly) in this orientation, as a result of which the profile can be relatively less extreme: such a lens will resemble a flat pane more closely as regards its shape. Because the lens is less extreme owing to the two planes of refraction, the lens has a better focus in particular outside the design point (perpendicular incidence of light at the design point, oblique incidence of light outside the design point). Designing the lens "upside down" is thus in particular useful in the case of arrangements in which the lens has a fixed orientation, for example taking up a fixed position in the roof surface, as in the present situation (in contrast to many applications, in which the Fresnel lens moves along with the sun one or two directions and the light incidence practically coincides with the design point at all times).

As Figs. 13 shows, the Fresnel lenses 10, 11 are made up of a number of lens elements A and B. Said lens elements are formed by means of an injection-moulding process. This makes it possible to realise relatively small lens elements, so that the mould costs can be kept within bounds.

In the illustrated embodiment, the lens elements A and B consist of square pieces measuring ± 40 x 40 cm. It is possible to use only two moulds (moulding dies) or, for example, one mould with several inserts in the form of a half central part A, A' and a half outer part B, B'. The lens elements A, A' and B, B' may be identical to each other, i.e. provided in mirror image so as to form the symmetrical lens. Thus, a lens measuring ± 160 x 40 cm can be formed using two pairs of two different lens elements A/A' and B/B'.

It has been decided to use several (relatively small) lens elements in order to reduce the mould costs. The decision to use several lens elements also makes it possible to optimise the height and the width of the serrations for each lens element, so that the use of material and the efficiency of each lens element can be evenly balanced. In the illustrated case, the lens element A can be thinner than the lens element B, where the lens must be "stronger" in order to deflect the light, so that the height of the serrations and thus the thickness of the plate must be greater. Each lens element A, B is circumferentially provided with an upright edge or ledge 48, which preferably projects both in upward and in downward direction. Furthermore, a leg 49 is provided near the corners of each lens element, just within the ledge 48.

The ledge 48 has a number of advantages. In the first place it prevents warping of the flat lens element during the injection moulding process and the subsequent cooling process. Since the ledge extends both above and below the lens element (so that the Fresnel lens joins in the centre), the lens element can be readily incorporated in a double glazing pane 50, so that a construction comprising three layers and air present therebetween is formed. This leads to a higher U-value of the glass pane. The drawback of the additional light capture of the three layers is in that case converted into an additional advantage. In addition to that, the ledge keeps the plastic lens surfaces, which are susceptible to scratching, entirely clear of the glass, so that damage to the lens surfaces caused by friction with the glass sheets in the course of time is excluded.

The upright ledge 48 and the legs 49 are also used in the relative positioning of the lens elements A, B between the glass sheets 51 of the glass pane 50: they cannot pass one another when the glass pane 50 is closed if the space between the glass sheets 51 is less than twice the combined height of the ledge 48 and the leg 49. The legs 49 thus also function as spacers between the glass sheets 51: because of the use of the legs 49, the ledge can be less high, which saves material: the overall ledge height + the leg height enable the lens elements A, B to be retained in the glass pane 50 with a minimal usage of material.

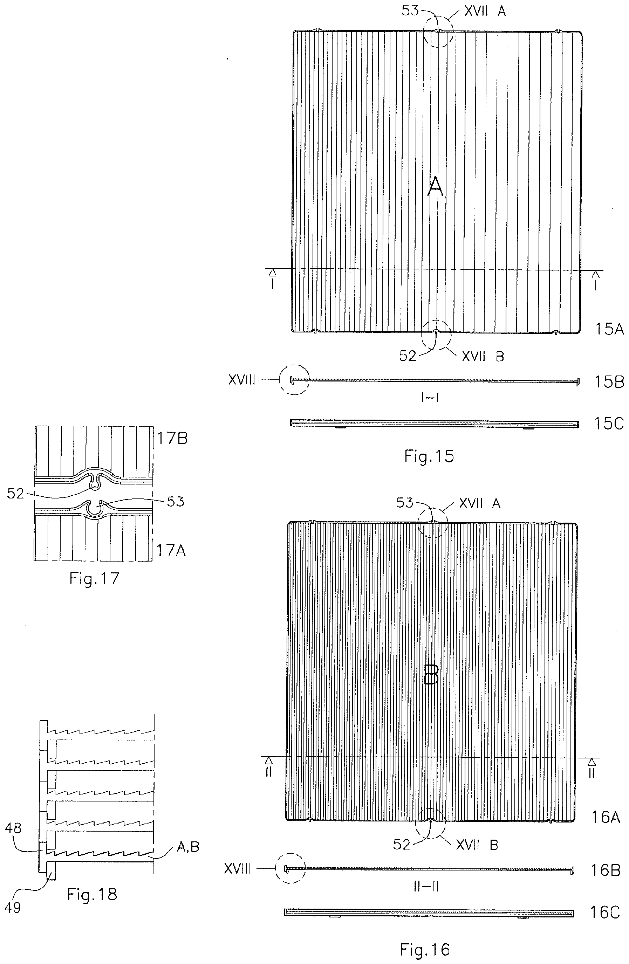

The main function of the legs 49, however, is to make the lens elements A, B easily stackable (see Fig. 18), so that the lens elements can be stacked by means of a robot after being injection-moulded rather than by a person at the injection moulding machine. Another advantage is the fact that no expensive packaging for the lens elements is needed: the lens elements A or B are separated from each other by the legs 49 and the ledges 48, so that the surfaces of the lens elements are clear of each other. Common flat lens elements must be provided with a protective film on both sides so as to protect them against scratching. The ledges 48 and the legs 49 thus also function as spacers during transport and storage.

At their opposite sides, which in practice point in the direction parallel to the ridge 8 of the greenhouse, the lens elements A, B are provided with jigsaw puzzle-like or dovetail-like - i.e. pull-resistant and preferably also slide-resistant - connecting means 52, 53 (see Figs. 15 - 17), so that the lens elements are immovably and non-rotatably connected in a row parallel to the ridge 8 (see Fig. 13). The connecting means 52, 53 do allow a minor angular displacement transversely to the plane of the lens elements. The rows of lens elements A, A', B, B' are freely movable relative to each other in the direction parallel to the ridge 8 of the greenhouse, however(although they must properly abut, which is effected automatically, however, by the gravity component provided by the downward slope α of the south deck (Fig. 14).

As already indicated before, the lens elements A, B are incorporated in usual insulating double glazing panes 50, which may be provided with an anti-reflective coating at least on their facing sides, but possibly even on all four sides, and which may have a glass thickness of 4 mm with a cavity of 16 mm. Because the surfaces of the lens elements A, B and the glass sheets 51 are clear of each other and can thus freely expand and contract relative to each other, the lens elements need not be laminated on one of the glass sheets, so that there can be no delamination problems, which means a saving of costs. The surfaces of the lens elements A, B may also be provided with an anti-reflective coating.

The panes of the north deck 6 have preferably been made diffuse, so that the light that may be incident on the north deck will enter the greenhouse as diffuse light. In the situation in which double glazing is used for the north deck, the upper surface of the glass sheet will preferably have been made diffuse on the inner side/lower side. Thus, all the light that enters the greenhouse will be diffuse light. After all, the light that enters the greenhouse via the Fresno lenses then, 11 will also be diffuse if it reaches the ground surface of the greenhouse. Usually, the panes of the north deck 6 will not be provided with an anti-reflective coating, because any light reflected by the panes of the north deck 6 will enter the greenhouse yet via the south deck 5.

As already mentioned before, the greenhouse roof is a so-called Venlo roof: except for the aluminium glazing bars 9, the gutter 7 and the ridge 8, the roof does not comprise any structural parts. A choice for a Venlo roof is based on the shadow formed by the roof on the absorption elements 12, 13 and on PV cells that form part thereof. In the case of a Venlo roof (in contrast to a wide span roof structure), the shadow pattern is quite uniform and repetitive (each glazing bar 9 casts a shadow strip, which shadow strips are spaced a regular distance apart), so that the electrical connection of the PV cells can more easily be geared thereto (shadows on PV cells constitute a major problem in PV installations). It is possible in that case to connect the PV cells in one PV module having the length of the centre distance of the glazing bars (for example 1,250 mm) in parallel, and to subsequently connect said modules in series.

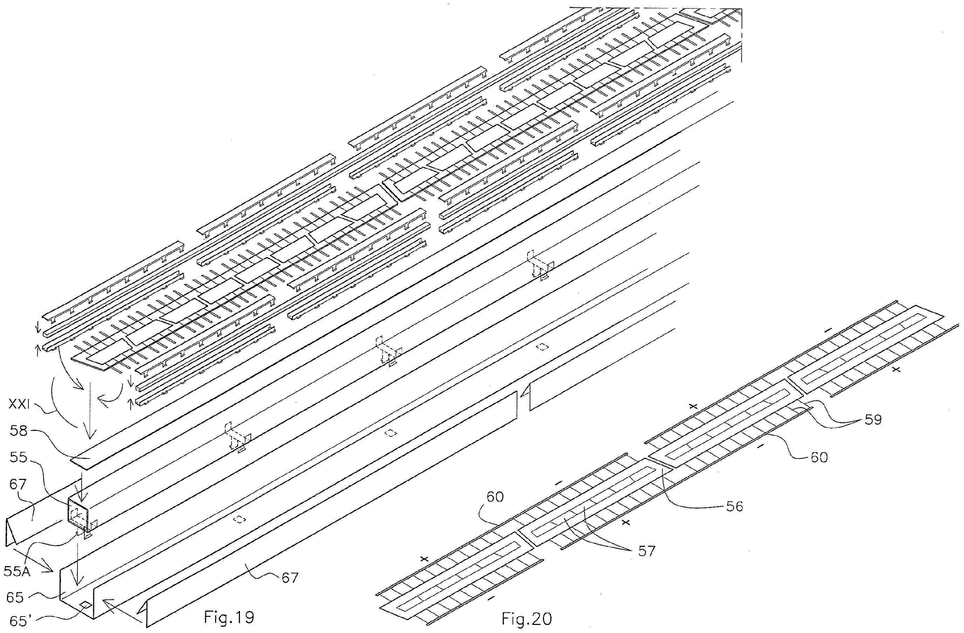

Figs. 19 - 22 show one of the absorption elements designed on that basis. The absorption element comprises a water-cooled rectangular or square tube 55, preferably made of stainless steel, which provides constructional stiffness and strength (suspended from the previously described adjusting cables at intervals equalling two section dimensions of, for example, 5.0 m). Said tube 55 also functions as a conduit for the cooling water (it has two functions, therefore). Said tube 55 is welded in place in situ in connection with requirements of dimensional precision, straightness and maximum hydraulic capacity, and that at a minimum resistance.

On top of the tube 55, PV modules 56 comprising PV cells 57 in the form of a PV laminate are provided, preferably by means of a heat-conducting, self-adhesive tape 58. The upper side of the PV laminate consists of, preferably hardened, antireflective glass, and the underside consists of, preferably anodized, aluminium sheet in connection with the maximum thermal conduction and electrical insulation. Present therebetween are the PV cells 57, which are suitable for 20 to 30 suns, or a radiation density of 2 to 3 W/cm², and which are laminated with, preferably heat-conducting (electrically insulating), tape or modified (heat-conducting), for example by the addition of a zinc oxide, EVA film (between at least the PV cells and the aluminium backing plate) and standard EVA film, silicone rubber, moulding resin or another encapsulation material above and beside the PV cells.

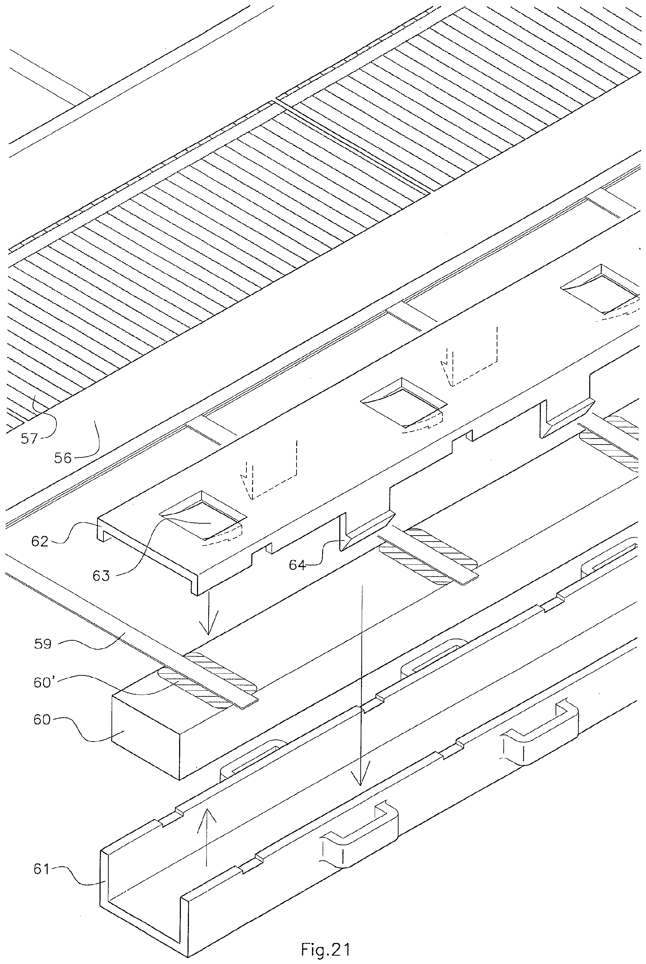

Electrically conductive connecting terminals 59 of the PV modules 56 in the form of contact strips are electrically connected in situ by means of heavy, solid electrical conductors 60. Said electrical conductors are preferably made of aluminium. Said aluminium may be provided with a protective coating or be tin-plated or silver-plated. Possibly, said protection may be provided only at the location of the electrical connecting terminals 59; for example via partial tin-plating, using a masking technique, see the hatched areas 60' on the electrical conductor 60 in Fig. 21. The electrical conductors 60 have a length of 2x the module length, i.e. 2x the centre distance of the roof glazing bars 9.

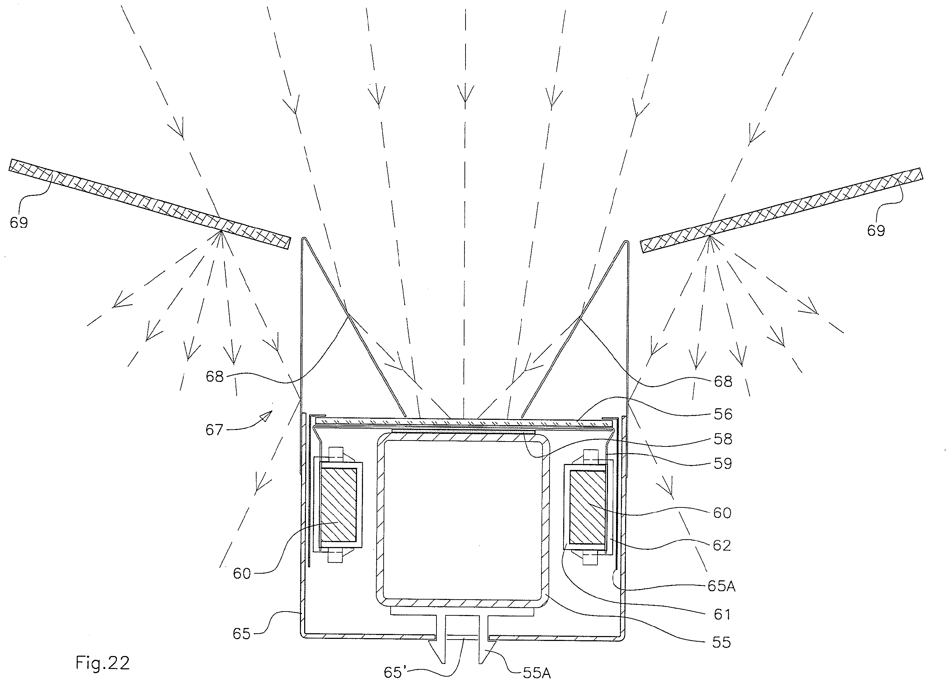

The electrical connection between the connecting terminals 59 of the PV laminate 56 and the heavy electrical conductors 60 is realised by means of a clamp or pressure contact. The heavy electrical conductors 60 are to that end put in an (injection-moulded) plastic container 61 (to save costs, lengths of 30 to 40 cm may be used, preferably a divisor of the dimension of the PV module), which container also functions as an electrical insulator. The thin connecting terminals of the laminate are laid against the electrical conductor 60 according to potential (+ and -). Using a separate or a hinged cover 62 (which may also be provided on the side) and a resilient rubber cord or (preferably) a co-moulded plastic leaf spring 62 for each contact point or place, the clamp/pressure contact is realised by closing the plastic cover 62 or the side into snap connections 64 (wedge-shaped with a hooked edge, so that it can be opened again for maintenance/removal). The connected thin connecting terminals 59 are subsequently folded under the PV laminate 56, beside the tube 55 (see Fig. 22). An electrically insulating section 65A is moved over the edge of the module and the folded-over connecting terminals 59. Such an insulating section is not needed if the dish 65 is not conductive.

As Fig. 19 shows, the aluminium dish 65 may be removably snap-connected to plastic snap sections 55A on the tube 55 via holes 65' centrally provided in the bottom thereof. If the aluminium dish 65 is snap-connected to the plastic snap sections 55A (and the plastic snap section 55A projects through the holes 65', therefore), this can only be done on the underside, because the sun cannot reach that location. Otherwise, the concentrated sunlight would shine on the plastic, causing it to melt.

As Fig. 20 shows, the PV modules 56 are arranged in alternating relationship (turned 180° relative to each other), so that all the PV modules 56 can be identical. The PV modules 56 are thus not rotationally symmetrical, but invariably have the + and - sides on both sides of the PV cells 57 (i.e. on either side of the laminate) on the same side. By forming the ends 66 of the PV modules with a slight inclination, in such a manner that a trapezoidal PV module 56 is obtained, a PV module 56 cannot be incorrectly mounted on the tube 55, whilst the connecting terminals 59 are automatically correctly oriented. Other adaptations as regards the shape for imposing the alternate arrangement of the PV modules are also conceivable, of course. The facing edges of the PV modules 56 will have a parallel shape deviating from a straight line perpendicular to the longitudinal edges of the modules. With a view to obtaining an optimum use of the wafer surface of which the PV cells 57 are formed, said PV cells 57 may have bevelled edges and preferably the inclination of the edges of the PV modules 56 is the same as the inclination of the PV cells 57 (see Figs. 19 and 20), so that the surface of the PV module 56 can be optimally occupied by the PV cells 57.

As already said before, the PV cells 57 are connected in parallel, whilst the PV modules 56 are connected in series. As a result of the arrangement and the interconnection of the modules via the electrical conductors 60, plug connections between the modules 56 are not required, which, given the large currents, leads to a significant saving of costs. Because the length of the modules corresponds to the centre distance of the glazing bars 9, each PV module 56 will receive the same amount of shadow, which shadow will not adversely affect the series connection between the modules. The PV module may also be configured to have an L dimension of twice or half the centre distance of the glazing bars, in principle it is important, therefore, that a group of PV cells be connected in parallel to a length equalling the centre distance of the glazing bars. The snap connection of the electrical conductors 60 makes it easier to install the whole in situ, so that installation errors will hardly occur.

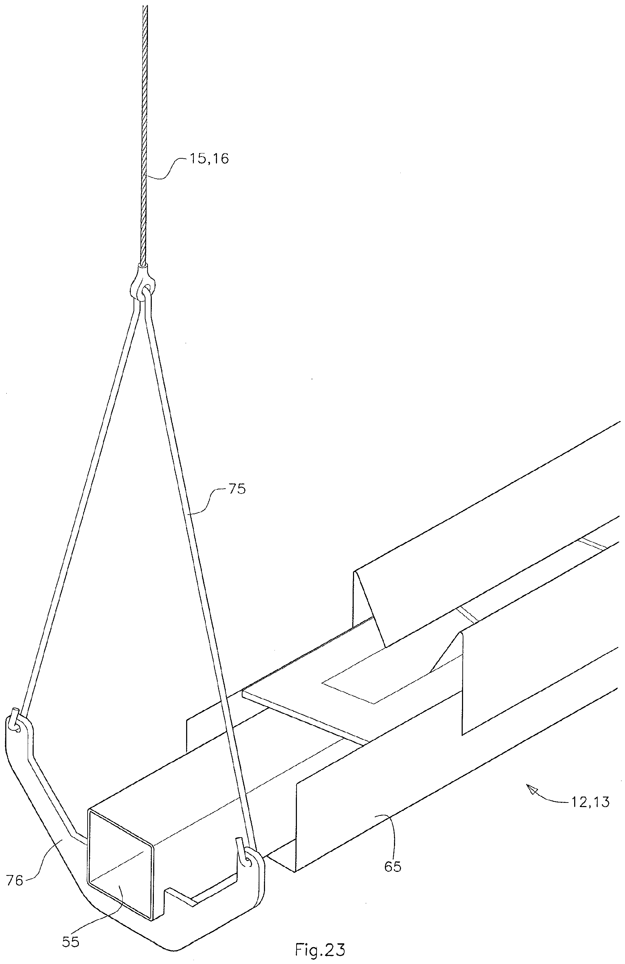

As Fig. 23 shows in particular, the absorption element is provided with a second concentrator 67 comprising inclined mirrors 68, which join the PV cells 57 on either side and which concentrate the sunlight further on the PV cells 57. The provision of said second concentrator 67, which is fixedly disposed relative to the absorption element, is possible because the upper surface of the absorption element 12, 13 will remain oriented perpendicular relative to the light beam owing to the moving mechanism that is used. As a result, the fixed second concentrator 67 will automatically be oriented reasonably optimally relative to the light beam. Because of the triangular shapes (it may also be an optimised concave or convex mirror for that matter) of the second concentrator 67, space is formed between the PV cells 57 and the edge of the module, and thus space for the realisation of the connection between the PV cells 57 and the connecting terminals 59 and the electrical conductors 60. The connection of the electrical conductors 60 is constructed in the space under the PV laminate 56, under and beside the PV cells 57 under the mirrors 68 of the second concentrator 67. The space under the mirrors 68 is additionally used for realising the required minimum spacing between the PV cells 57 and the edge of the laminate 56 in connection with undesirable entry of moisture into the laminate, which moisture might affect the cells. Said space is also required in order to be able to realise a sufficiently thick insulation of the absorption element. The space under the mirrors 68 is thus effectively used for several purposes, so that the mirrors are useful from this viewpoint as well. The connecting terminals 59 of - preferably tin-plated - copper exit the PV laminate 56 as quickly as possible (with a view to minimising the costs). The connecting terminals 59 may be soldered to the PV cells 57 or be glued thereto by means of electrically conductive glue.

In the absorption elements, the various functions are separated as much as possible: constructional strength and stiffness, PV cells laminate, water cooling, electrical current transport are essentially realised by different elements.

The absorption elements 12, 13 may also be used for daylight control by moving the absorption element 12, 13 out of the focal line of the lenses 10, 11, so that part of the light beam will move past the absorption element 12, 13. This may lead to the formation of lighted portions and shadow portions, and in order to prevent this, each absorption element 12, 13 is provided with diffuser glass 69 on either side thereof, which diffuser glass is capable of diffusing the light from the light beam in such a manner that the light and the dark spots will be smoothed out as much as possible. Instead of diffuser glass, also other light-diffusing elements, such as Fresnel lenses, may be used.

The aforesaid second concentrator 67 is a folded aluminium mirror section, which also continues downward along the side of the absorption element, so that the light which falls "beside" (but against) the absorption element is reflected into the greenhouse as much as possible, so that none of the light is lost and all the light is advantageously utilised. Said mirror can also cooperate with the diffuser glass 69 (if used). In both situations there is collaboration with the daylight control function, therefore.

Fig. 23 is a more detailed view of the suspension of one of the absorption elements 12, 13 from one of the r-cables 15, 16. Said suspension in this case comprises an inverted V-hook 75, whose bent free ends hook into the eyes of a yoke 76 that supports the absorption element 12, 13. The V-hook 75 is preferably made of a rigid construction material (in this case a solid material Ø mm). This has the advantage that the inverted V-hook is also capable of taking up small pressure forces, which is important if the absorption elements tends to tilt in "anti-clockwise" direction (in Fig. 3) due to the force of gravity. If the inverted V-hook were to consist of a cable, the right-hand cable might exhibit some slack in that case. The hook 75 has two functions: keeping the absorption element 12, 13 up with as little shadow on the absorption element as possible (hence the wide legs) and stabilising the absorption element (hence the wide legs). The rigid, tailor-made suspension, in this case in the form of the inverted V-look 75, also makes it easier to connect the absorption elements to the cables 15, 16.

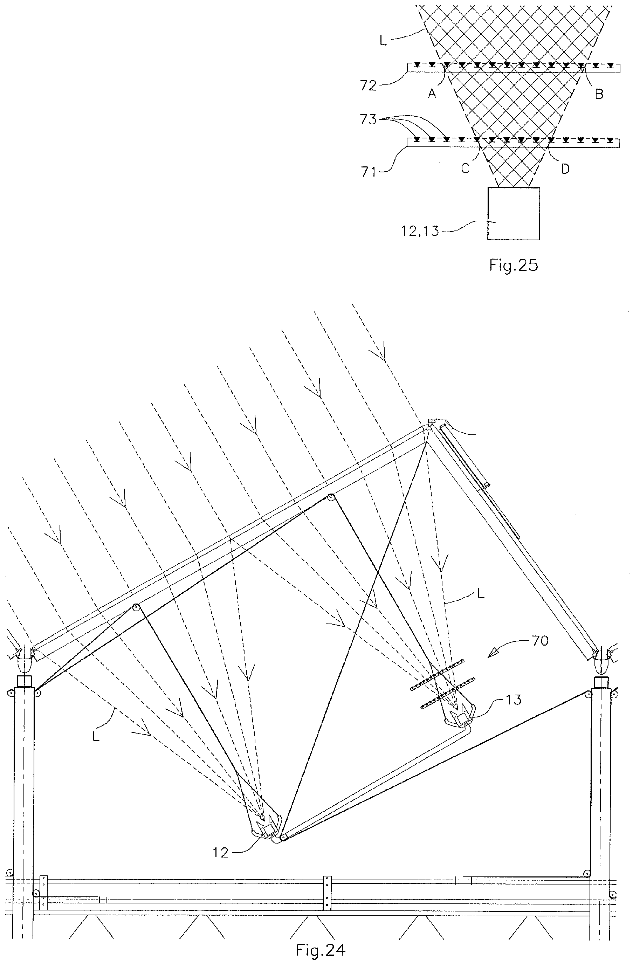

In Figs. 24 and 25 there is shown another aspect of the invention in the form of a sun tracking system 70 for the moving mechanism 14 of the absorption elements 12 and 13. The tracking system 70 in this case comprises two rows of sensors or detectors 71 and 72. The row of sensors 71 is disposed 2 - 10 cm above the absorption element 13, and the row of sensors 72 is disposed 10 - 20 cm above the absorption element 13. The two rows of sensors 71 and 72 are not disposed above each other but in the horizontal plane (in the direction parallel to the length of the absorption element 13), about 30 cm (or a centre distance of the glazing bars, in this example 1.25 m) apart. This is done in order to prevent the possibility of a shadow on the lower row of sensors 71 (or not affect the fill factor of the PV cells too much). Each row 70, 72 comprises about 10 - 20 photosensitive sensors. Said sensors may be photodiodes, photo transistors or light-dependent resistors (LDRs). One row of light-dependent resistors is capable of measuring differences in light intensity. If the absorption elements 12, 13 are positioned close to the focal point or the focal line in question on the basis of calculated values from the sun's position, points C and D can be determined from differences in light intensity in the signals from the lower row of sensors 71. Likewise, points A and B can be determined from differences in light intensity as obtained from the upper row of light-sensitive sensors 72. The boundary of the focussing light beam L is thus known. Once points A B C D have been determined from the differences in light intensity, the position and the inclination of the boundaries of the light beam L can be determined by means of (computer) calculations. Said boundaries indicate the shape of the converging light rays to the focal line. Subsequently, the position of the focal line can be determined from the details of the position and the inclination of the boundaries of the light beam L and the information about the width of the focal line. The quick determination of the position of the focal line is important in order to prevent movement to and fro of the absorption elements 12, 13 upon determining the location of the focal line. It also prevents energy loss resulting from unnecessary energy consumption by the motors and the drive units of the moving mechanism 14 and from the fact that the absorption elements 12, 13 are not positioned in the focal line.

In the case of larger angles of incidence, the light-dark transitions at the boundaries of the light beam L will be less sharp. In that case the correct position of the boundaries of the light beam L will be determined from the intensity changes of the two rows of sensors. If necessary, the sensor may to that end be calibrated with the measurement of the generated power.

The software of the computer that forms part of the tracking system is learning software, the positions reached are stored. This enables the tracking system 70 to become more and more effective as a result of the addition of information.

The invention is not limited to the embodiments shown in the drawing and described in the foregoing, which can be varied in several ways within the scope of the invention. Thus it is possible to increase the number of lenses between the gutter and the ridge to, for example, three or four, in which case also the number of absorption elements will increase to three or four. It is not necessary in that case to connect the lower absorption elements to the upper two absorption elements again via a rigid link, a cable connection might also be possible in that case, if the ϕ-cable engages the rigid link between the upper two absorption elements. It is furthermore possible not to use linear Fresnel lenses but non-linear Fresnel lenses (in particular circular Fresnel lenses with point concentration). The pulleys of the r-cables and the ϕ-cables must rotate about an (additional) axis in that case (so as to give said cables space to turn "to the left" and "to the right" in the direction of the end walls), and at some point along the roof length or on the end wall there will be provided an additional adjusting mechanism which can translate the assembly of absorption elements in the direction parallel to the ridge of the roof. The point of engagement of the ϕ-cable near the ridge will need to be moved to the point near the upper pulley 23 of the highest r-cable. The rigid link need not hinge with the cooling tube of the absorption elements in that case, which cooling tube will become a kind of supply-return pipe in that case. A round or square PV cells provided with a heat exchanger alias a module is pivotally suspended thereabove (or rather, the cooling water tube is suspended therebelow).

Although the invention has been described on the basis of a Venlo greenhouse having asymmetric roof sections, the invention can also be used with greenhouses (Venlo, wide span or other type) having (an) asymmetric roof(s). The invention is furthermore not limited to use in greenhouses used in horticulture, but the invention can also be used in other structures provided with a roof, such as office buildings, houses and the like, in which case the lenses can be incorporated in (sloping) roofs of atriums, conservatories and the like, which will be substantially oriented toward the south (or toward the north on the southern hemisphere) in that case. In those cases the shadow patterns may be caused by elements other than glazing bars. It is also possible, of course, to use a single (Fresnel) lens with an associated absorption element in those cases. The various features of the greenhouse can also be realised in such structures.

## Claims

1. A greenhouse of the "Venlo" type, comprising a framework for supporting at least a roof structure, which roof structure (4) is provided with at least one, preferably asymmetric, roof section comprising a substantially south-facing south deck (5) and, adjoining said south deck, a north deck (6), which north deck and south deck are bounded by a gutter (7) on one side and by a higher-positioned ridge (8) on the opposite side, wherein the north deck is provided with panes and air windows and the south deck is provided with at least two, preferably linear, Fresnel lenses (10, 11) disposed between the gutter and the ridge, each Fresnel lens having associated absorption elements (12, 13) provided therebelow, which Fresnel lenses are arranged for tracking, with at least two degrees of freedom, the position of the sun by means of a moving mechanism (14) connected to the absorption elements, which moving mechanism is provided with pulling cables, wherein the absorption elements are suspended from adjustable suspension cables (r-cables) (15, 16) which extend from the absorption elements, at least substantially according to the central axis of the associated lenses, to the south deck and hence, upon being adjusted, control the distance to the lenses, whilst at least one other adjustable cable (ϕ-cable) (17) extends to the north deck and, upon being adjusted, controls the angle ϕ between the vertical and the r-cable, **characterised in that** the absorption elements are combined into a unit by means of a rigid link (20), and the ϕ-cable engages said unit at a location spaced from the absorption element that is located closest to the north deck.

2. A greenhouse according to claim 1, wherein the ϕ-cable engages the rigid link at a location proximate to the absorption element most remote from the north deck, and wherein preferably the ϕ-cable at the north deck effectively engages at a location such that in all positions of the absorption elements, the angle between the ϕ-cable and the r-cables is at most approximately 140°, and the angle between the horizontal and the ϕ - cable is at most approximately 50°, whilst the ϕ-cable may extend from a position near the ridge of the roof section to a pulley on the unit of the absorption elements and extends further to a lower location at or below the north deck and, for example, the ϕ-cable extends to a pulley on a column of the framework under the north deck.

3. A greenhouse according to either one of the preceding claims, wherein the absorption elements are arranged to be directed towards the centre of the associated Fresnel lens at all times, wherein the absorption elements may each individually be attached to one of the r-cables and be rotatably connected to the rigid link between the absorption elements, and/or wherein the absorption elements are connected to the respective r-cables by means of a rigid suspension member which is bell-mouthed at the lower side at right angles to the length of the absorption elements, wherein drive units for the r- and ϕ-cables may be attached to respective horizontal trusses of the framework, and the ϕ-cable may be diverted 180° around a pulley at the location of the horizontal truss, which pulley is movable parallel to the ϕ-cable and which is connected to the associated drive unit, wherein preferably a number of horizontal trusses are provided in a direction parallel to the ridge of a roof section, whilst the absorption elements at at least a number of the trusses, and preferably at every individual truss, are provided with r-and ϕ-cables and associated drive units on the horizontal trusses, wherein the drive units of a number of horizontal trusses are interconnected and are adjusted by means of a single drive motor, wherein the drive units on the horizontal trusses may be provided with gear racks which are connected to the associated cables, and with pinions which mate with the associated gear racks and which are interconnected by a torsion-rigid shaft which can be rotated by the associated drive motor, wherein the greenhouse may comprise a number of adjoining roof sections, and wherein the drive units for the r-and ϕ-cables of a number of roof sections are interconnected.

4. A greenhouse according to any one of the preceding claims, wherein the ratio of the width of the Fresnel lenses in the direction between the gutter and the ridge to the focal line (focus) distance is at most approximately 0.85, and preferably ranges between approximately 0.66 and 0.82, whilst preferably the Fresnel lenses are made up, at least in the direction between the gutter and the ridge, of a number of elements formed by means of moulding dies, wherein the Fresnel lenses may be made up of a number of pairs of elements which are arranged in mirror symmetry with respect to the line of symmetry of the Fresnel lens, and wherein the Fresnel lenses may be provided with grooves on the side of the lens that faces upward, whilst the Fresnel lenses are preferably disposed between glass sheets of a pane, wherein a number of elements of a Fresnel lens may be disposed between two glass sheets, which elements are provided, at least at the upper edge and the lower edge, with a ledge extending transversely to the element, which ledge preferably extends to the bottom side and the upper side, and wherein the elements may be formed by injection moulding, and which may be provided at the edges thereof, preferably proximate to the corners, with stacking elements, such as projecting legs, on at least one side for cooperation with the ledges, whilst the Fresnel lenses are preferably made up of a number of elements, seen in the direction parallel to the ridge, and the elements of the Fresnel lenses are provided at their opposite side edges with form-locking connecting elements, such that, seen in the direction parallel to the ridge, elements adjacent to each other are interconnected in such a manner as to be resistant to tensile strain.

5. A greenhouse according to any one of the preceding claims, wherein the air windows at the north deck are configured as sash windows, wherein preferably the drive unit for the air windows is attached to the north deck, and wherein the north deck may be provided with a (transparent) rain cover at a location above the opening of the sash windows, which rain cover slopes downwards from the north deck, at an angle with respect to said north deck, to a free end, and wherein the rain cover may be curved and the angle that the rain cover makes with the north deck increases in the direction of the free end, whilst the angle which the south deck makes with the horizontal may range between 10° and 40°, preferably being approximately 30°, and the north deck extends at least substantially perpendicularly thereto.

6. A greenhouse according to any one of the preceding claims, wherein the absorption elements are provided with a number of PV modules comprising PV cells, wherein the PV cells within a PV module are preferably parallel-connected and the adjacent PV modules are series-connected, wherein the absorption elements may comprise support sections which are welded together in situ, on which support sections the PV modules are placed, preferably using adhesive strips, and wherein the adjacent PV cells within a PV module may be provided with connecting terminals projecting transversely to the length of the PV modules, wherein adjacent PV modules are arranged in alternating relationship, such that in the case of adjacent PV modules, the plus terminals of one PV module project to the same side as the associated minus terminals of the other PV module, and thus a current conductor extending the length of two adjacent PV modules is connected to all the terminals of the adjacent modules that belong together and that project to one side, as a result of which the PV modules are conductively connected in series, wherein the current conductors may be attached to the PV modules by means of snap sections, preferably in that each terminal and the current conductor are clamped against each other by said snap sections, and wherein the snap sections may be provided with pressure elements for keeping the current conductors in contact with the terminals, wherein preferably at least a number of the PV modules exhibit a parallel shape, at the location of the facing edges, which shape deviates from a perpendicular line, for example in that said modules are cut slantwise in a mutually parallel direction.

7. A greenhouse according to any one of the preceding claims, wherein the absorption elements are provided on either side thereof with light diffusing elements, such as diffusing glass or Fresnel lenses for the purpose of daylight control, and/or wherein the absorption elements are provided with a second concentrator comprising mirrors that reflect the light from the Fresnel lenses to the absorption element, which second concentrator may continue downwards and which, if required, can co-operate with the light diffusing elements, whilst the north deck may be provided with panes having at least one diffuse surface, and preferably two Fresnel lenses, and hence two absorption elements, are provided between the gutter and the ridge of the south deck, and wherein the ratio of the distance between the gutter and the ridge to the length of the focal distance ranges between 0.6 and 1.1.

8. A structure comprising at least a roof structure (4), which roof structure comprises at least one roof section, the south deck (5) of which is provided with at least two Fresnel lenses (10, 11), below which absorption elements (12, 13) are provided, which absorption elements are arranged for tracking the position of the sun with at least two degrees of freedom by means of a moving mechanism (14) coupled to the absorption elements, which moving mechanism is provided with pull cables, wherein the absorption elements are suspended from adjustable suspension cables (r-cables) (15, 16) which extend from the absorption elements, at least approximately according to the central axis of the associated lenses, to the south deck, and hence, upon adjustment, control the distance to the lenses, whilst at least one other adjustable cable (ϕ-cable) (17) extends to the north deck and, upon being adjusted, controls the angle ϕ between the vertical and the r-cables, **characterised in that** the absorption elements are combined into a unit by means of a rigid link (20), and the ϕ-cable engages said unit at a location spaced from the absorption element that is located closest to the north deck.

## Patentansprüche

1. Treibhaus des "Venlo"-Typs, aufweisend eine Rahmenkonstruktion zum Tragen mindestens einer Dachstruktur, wobei die Dachstruktur (4) mit mindestens einem, vorzugsweise asymmetrischen, Dachabschnitt versehen ist, der eine im Wesentlichen zur Südseite ausgerichtete Süddachfläche (5) und eine an die Süddachfläche angrenzende Norddachfläche (6) aufweist, wobei die Norddachfläche und die Süddachfläche auf einer Seite von einer Rinne (7) und auf der gegenüberliegenden Seite von einem höher angeordneten First (8) begrenzt sind, wobei die Norddachfläche mit Glasscheiben und Lüftungsfenstern versehen ist und die Süddachfläche mit mindestens zwei zwischen der Rinne und dem First angeordneten, vorzugsweise linearen, Fresnel-Linsen (10, 11) versehen ist, wobei unterhalb jeder Fresnel-Linse zugehörige Absorptionselemente (12, 13) bereitgestellt sind, welche Fresnel-Linsen konfiguriert sind, mit Hilfe eines mit den Absorptionselementen verbundenen Bewegungsmechanismus (14), der mit Zugkabeln versehen ist, mit mindestens zwei Freiheitsgraden der Position der Sonne nachgeführt zu werden, wobei die Absorptionselemente an anpassbaren Aufhängungskabeln (r-Kabeln) (15, 16) aufgehängt sind, die sich von den Absorptionselementen wenigstens im Wesentlichen gemäß der zentralen Achse der zugehörigen Linsen zu der Süddachfläche erstrecken und die dadurch, nachdem sie angepasst wurden, den Abstand zu den Linsen steuern, während mindestens ein anderes anpassbares Kabel (ϕ-Kabel) (17) sich zur Norddachfläche erstreckt, und, nachdem es angepasst wurde, den Winkel ϕ zwischen der Vertikalen und dem r-Kabel steuert, **dadurch gekennzeichnet, dass** die Absorptionselemente mit Hilfe eines starren Verbindungsglieds (20) zu einer Einheit verbunden sind und das ϕ-Kabel im Eingriff mit der Einheit ist an einem Ort, der von dem Absorptionselement beabstandet ist, das sich am nächsten zur Norddachfläche befindet.

2. Treibhaus nach Anspruch 1, wobei das ϕ-Kabel mit dem starren Verbindungsglied an einem Ort in der Nähe des Absorptionselements im Eingriff ist, der am weitesten weg von der Norddachfläche angeordnet ist, und wobei vorzugsweise das ϕ-Kabel an der Norddachfläche an einem Ort effektiv im Eingriff ist, so dass in allen Positionen der Absorptionselemente der Winkel zwischen dem ϕ-Kabel und den r-Kabeln maximal ungefähr 140° ist und der Winkel zwischen der Horizontalen und dem ϕ-Kabel maximal ungefähr 50° ist, wobei das ϕ-Kabel sich von einer Position nahe dem First des Dachabschnitts zu einer Rolle an der Einheit der Absorptionselemente erstrecken kann und sich weiter zu einem tieferen Ort an oder unterhalb der Norddachfläche erstreckt und zum Beispiel das ϕ-Kabel sich zu einer Rolle an einer Säule der Rahmenkonstruktion unterhalb der Norddachfläche erstreckt.

3. Treibhaus nach einem der vorstehenden Ansprüche, wobei die Absorptionselemente angeordnet sind, um jederzeit zu dem Zentrum der zugehörigen Fresnel-Linse hingerichtet zu sein, wobei die Absorptionselemente jeweils einzeln an einem der r-Kabel befestigt und drehbar mit dem starren Absorptionselemente-Verbindungsglied zwischen den Absorptionselementen verbunden sein können, und/oder wobei die Absorptionselemente mittels eines starren Aufhängungsglieds, das an der unteren Seite im rechten Winkel zu der Länge der Absorptionselemente glockenförmig geöffnet ist, mit den jeweiligen r-Kabeln verbunden sind, wobei Antriebseinheiten für die r- und ϕ-Kabel an jeweiligen horizontalen Trägern des Rahmenwerks angebracht sein können und das ϕ-Kabel um eine Rolle am Ort des horizontalen Trägers um 180° umgelenkt werden kann, wobei die Rolle parallel zu dem ϕ-Kabel bewegbar ist und mit der zugehörigen Antriebseinheit verbunden ist, wobei vorzugsweise in einer zum First des Dachabschnitts parallelen Richtung mehrere horizontale Träger bereitgestellt sind, während die Absorptionselemente an mindestens mehreren Trägern, und vorzugsweise an jedem einzelnen Träger, mit r- und ϕ-Kabeln und an den horizontalen Trägern angeordneten zugehörigen Antriebseinheiten versehen sind, wobei die Antriebseinheiten mehrerer horizontaler Träger miteinander verbunden sind und mittels eines einzigen Antriebsmotors angepasst werden, wobei die an den horizontalen Trägern angeordneten Antriebseinheiten Zahnstangen, die mit den zugehörigen Kabeln verbunden sind, und Zahnräder aufweisen können, die mit den zugehörigen Zahnstangen zusammenarbeiten und die durch eine torsionssteife Welle miteinander verbunden sind, die von dem zugehörigen Antriebsmotor gedreht werden kann, wobei das Treibhaus mehrere aneinandergrenzende Dachabschnitte aufweisen kann und die Antriebseinheiten für die r- und ϕ-Kabel mehrerer Dachabschnitte miteinander verbunden sind.

4. Treibhaus nach einem der vorstehenden Ansprüche, wobei das Verhältnis zwischen der Breite der Fresnel-Linsen in der Richtung zwischen der Rinne und dem First und der Brennlinie (Fokus) maximal ungefähr 0,85, und vorzugsweise zwischen ungefähr 0,66 und 0,82 ist, wobei die Fresnel-Linsen, zumindest in der Richtung zwischen der Rinne und dem First, vorzugsweise aus mehreren Elementen bestehen, die mittels eines Formwerkzeugs hergestellt sind, wobei die Fresnel-Linsen aus mehreren Elementpaaren bestehen können, die spiegelsymmetrisch bezüglich der Symmetrielinie der Fresnel-Linse angeordnet sind, und wobei die Fresnel-Linsen an ihrer nach oben weisenden Linsenseite mit Rillen versehen sein können, während die Fresnel-Linsen vorzugsweise zwischen Glasschichten einer Glasscheibe angeordnet sind, wobei zwischen zwei Glasschichten mehrere Elemente einer Fresnel-Linse angeordnet sein können, die Elemente zumindest an der oberen Kante und der unteren Kante mit einer sich transversal zu dem Element erstreckenden Leiste versehen sind, die sich vorzugsweise zu der unteren Seite und der oberen Seite erstreckt, und wobei die Elemente durch ein Spritzgussverfahren hergestellt sein können und an ihren Kanten, vorzugsweise nahe an den Ecken, zumindest an einer Seite mit Stapelelementen, beispielsweise vorstehenden Beinen, zum Zusammenwirken mit den Leisten versehen sein können, während in der zum First parallelen Richtung die Fresnel-Linsen vorzugsweise aus mehreren Elementen bestehen können und die Elemente der Fresnel-Linsen an ihren gegenüberliegenden Seitenkanten mit formschlüssigen Verbindungselementen versehen sind, so dass in der zum First parallelen Richtung gesehen benachbarte Elemente derart miteinander verbunden sind, um resistent gegen Zugbeanspruchung zu sein.

5. Treibhaus nach einem der vorstehenden Ansprüche, wobei die Lüftungsfenster an der Norddachfläche als Schiebefenster konfiguriert sind, wobei die Antriebseinheit für die Lüftungsfenster an der Norddachfläche angebracht ist, und wobei an einem Ort oberhalb der Öffnung der Schiebefenster die Norddachfläche mit einer (transparenten) Regenabdeckung versehen sein kann, wobei die Regenabdeckung sich von der Norddachfläche abwärts in einem Winkel bezüglich der Norddachfläche zu einem freien Ende erstreckt und wobei die Regenabdeckung gebogen sein kann und der Winkel, den die Regenabdeckung mit der Norddachfläche bildet, in Richtung des freien Endes zunimmt, wobei der Winkel, den die Süddachfläche mit der Horizontalen bildet, zwischen 10° und 40°, vorzugsweise ungefähr 30°, sein kann, und die Norddachfläche sich im Wesentlichen senkrecht dazu erstreckt.

6. Treibhaus nach einem der vorstehenden Ansprüche, wobei die Absorptionselemente mit mehreren PV-Modulen, die PV-Zellen aufweisen, versehen sind, wobei die PV-Zellen in einem PV-Modul vorzugsweise in Parallelschaltung miteinander verbunden sind und benachbarte PV-Module in Reihenschaltung verbunden sind, wobei die Absorptionselemente Trägerabschnitte aufweisen können, die vor Ort zusammengeschweißt sind und auf welchen die PV-Module, vorzugsweise unter Verwendung von Klebstreifen, angeordnet sind, wobei benachbarte PV-Zellen in einem PV-Modul mit Verbindungsanschlüssen, die sich transversal zur Länge der PV-Module erstrecken, versehen sein können, wobei benachbarte PV-Module in abwechselnder Beziehung angeordnet sind, derart, dass im Fall von benachbarten PV-Modulen die Plus-Anschlüsse des einen PV-Moduls zu der gleichen Seite vorragen wie die zugehörigen Minus-Anschlüsse des anderen PV-Moduls, und somit ein Stromleiter, der sich entlang zweier benachbarter PV-Module erstreckt, mit allen Anschlüssen der benachbarten Module, die zusammengehören und die zu einer Seite vorragen, verbunden ist, infolgedessen die PV-Module in Reihenschaltung leitend verbunden sind, wobei die Stromleiter mittels Schnappabschnitten an den PV-Modulen angebracht sein können, vorzugsweise dadurch, dass jeder Anschluss und der Stromleiter mittels der Schnappabschnitte gegeneinander geklemmt sind, und wobei die Schnappabschnitte mit Presselementen zum Halten der Stromleiter in Kontakt mit den Anschlüssen versehen sein können, wobei zumindest mehrere PV-Module an ihren zugewandten Kanten eine parallele Gestalt haben, die von einer senkrechten Linie abweicht, zum Beispiel indem die Module in einer gegenseitig parallelen Richtung schräg zugeschnitten sind.

7. Treibhaus nach einem der vorstehenden Ansprüche, wobei die Absorptionselemente an ihren jeweiligen Seiten mit lichtstreuenden Elementen, beispielsweise streuendes Glas oder Fresnel-Linsen zur Tageslichtsteuerung, versehen sind und/oder wobei die Absorptionselemente mit einem zweiten Sammler versehen sind, der Spiegel aufweist, die das Licht von den Fresnel-Linsen zu dem Absorptionselement reflektieren, wobei der zweite Sammler sich abwärts fortsetzt und, bei Bedarf, mit den lichtstreuenden Elementen zusammenwirken kann, während die Norddachfläche mit Glasscheiben, die mindestens eine streuende Oberfläche haben, versehen sein kann, und zwischen der Rinne und dem First der Süddachfläche vorzugsweise zwei Fresnel-Linsen und folglich zwei Absorptionselemente bereitgestellt sind, und wobei das Verhältnis des Abstands zwischen der Rinne und dem First und der Länge des Fokusabstands zwischen 0,6 und 1,1 ist.

8. Struktur aufweisend mindestens eine Dachstruktur (4), wobei die Dachstruktur mindestens einen Dachabschnitt aufweist, dessen Süddachfläche (5) mit mindestens zwei Fresnel-Linsen (10, 11) versehen ist, unterhalb welchen Absorptionselemente (12, 13) bereitgestellt sind, die dazu angeordnet sind, mittels eines mit den Absorptionselementen gekoppelten Bewegungsmechanismus (14), der mit Zugkabeln versehen ist, mit mindestens zwei Freiheitsgraden der Position der Sonne nachgeführt zu werden, wobei die Absorptionselemente an anpassbaren Aufhängungskabeln (r-Kabeln) (15, 16) aufgehängt sind, die sich von den Absorptionselementen wenigstens ungefähr gemäß der zentralen Achse der zugehörigen Linsen zu der Süddachfläche erstrecken und die dadurch, nachdem sie angepasst wurden, den Abstand zu den Linsen steuern, während mindestens ein anderes anpassbares Kabel (ϕ-Kabel) (17) sich zur Norddachfläche erstreckt, und, nachdem es angepasst wurde, den Winkel ϕ zwischen der Vertikalen und den r-Kabeln steuert, **dadurch gekennzeichnet, dass** die Absorptionselemente mittels eines starren Verbindungsglieds (20) zu einer Einheit verbunden sind und das ϕ-Kabel mit der Einheit an einem Ort im Eingriff ist, der von dem Absorptionselement beabstandet ist, das sich am nächsten zur Norddachfläche befindet.

## Revendications

1. Serre de type « Venlo », comprenant une ossature destinée à supporter au moins une structure de toit, laquelle structure de toit (4) est pourvue d'au moins une section de toit, de préférence asymétrique, comprenant une plateforme méridionale sensiblement exposée au sud (5) et, attenante à ladite plateforme méridionale, une plateforme septentrionale (6), lesquelles plateforme septentrionale et plateforme méridionale sont délimitées par une gouttière (7) sur un côté et par un faîtage positionné plus haut (8) sur le côté opposé, dans laquelle la plateforme septentrionale est pourvue de vitres et de fenêtres à air et la plateforme méridionale est pourvue d'au moins deux lentilles de Fresnel, de préférence linéaires (10, 11) disposées entre la gouttière et le faîtage, chaque lentille de Fresnel ayant des éléments d'absorption associés (12, 13) ménagés en dessous, lesquelles lentilles de Fresnel sont agencées pour poursuivre, avec au moins deux degrés de liberté, la position du soleil au moyen d'un mécanisme de déplacement (14) connecté aux éléments d'absorption, lequel mécanisme de déplacement est pourvu de câbles de traction, dans laquelle les éléments d'absorption sont suspendus à des câbles de suspension ajustables (câbles r) (15, 16) qui prolongent les éléments d'absorption, au moins sensiblement selon l'axe central des lentilles associées, à la plateforme méridionale et, de ce fait, lorsqu'ils sont ajustés, régulent la distance aux lentilles, pendant qu'au moins un autre câble ajustable (câble ϕ) (17) s'étend vers la plateforme septentrionale, et lorsqu'il est ajusté, régule l'angle ϕ entre la verticale et le câble r, **caractérisée en ce que** les éléments d'absorption sont combinés en une unité au moyen d'un chaînon rigide (20), et le câble ϕ enclenche ladite unité à un emplacement espacé de l'élément d'absorption qui est situé le plus près de la plateforme septentrionale.

2. Serre selon la revendication 1, dans laquelle le câble ϕ enclenche le chaînon rigide à un emplacement à proximité de l'élément d'absorption le plus éloigné de la plateforme septentrionale, et dans laquelle de préférence le câble ϕ au niveau de la plateforme septentrionale s'enclenche efficacement à un emplacement de telle sorte que dans toutes les positions des éléments d'absorption, l'angle entre le câble ϕ et les câbles r est au plus d'approximativement 140°, et l'angle entre l'horizontal et le câble ϕ est au plus d'approximativement 50°, alors que le câble ϕ peut s'étendre d'une position près du faîtage de la section de toit vers une poulie sur l'unité des éléments d'absorption et s'étend plus avant vers un emplacement inférieur à ou en dessous de la plateforme septentrionale et, par exemple, le câble ϕ s'étend vers une poulie sur une colonne de l'ossature sous la plateforme septentrionale.

3. Serre selon l'une quelconque des revendications précédentes, dans laquelle les éléments d'absorption sont agencés pour être dirigés vers le centre des lentilles de Fresnel associées à tout instant, dans laquelle les éléments d'absorption peuvent chacun être individuellement attachés à l'un des câbles r et être connectés en rotation au chaînon rigide entre les éléments d'absorption, et/ou dans laquelle les éléments d'absorption sont connectés aux câbles r respectifs au moyen d'un organe de suspension rigide qui est évasé au niveau du côté inférieur à angle droit avec la longueur des éléments d'absorption, dans laquelle des unités d'entraînement pour les câbles r et ϕ peuvent être attachées à des fermes horizontales respectives de l'ossature, et le câble ϕ peut être écarté de 180° autour d'une poulie à l'emplacement de la ferme horizontale, laquelle poulie peut être déplacée parallèle au câble ϕ et qui est connectée à l'unité d'entraînement associée, dans laquelle de préférence un nombre de fermes horizontales est ménagé dans une direction parallèle au faîtage d'une section de toit, pendant que les éléments d'absorption au moins au nombre des fermes, et de préférence au niveau de chaque ferme individuelle, sont pourvus de câbles r et ϕ et d'unités d'entraînement associées sur les fermes horizontales, dans laquelle les unités d'entraînement au nombre des fermes horizontales sont interconnectées et sont ajustées au moyen d'un moteur d'entraînement unique, dans laquelle les unités d'entraînement sur les fermes horizontales peuvent être pourvues de crémaillères qui sont connectées aux câbles associés, et de pignons qui s'accouplent avec les crémaillères associées et qui sont interconnectées par un arbre rigide en torsion qui peut être mis en rotation par le moteur d'entraînement associé, dans laquelle la serre peut comprendre un certain nombre de sections de toit attenantes, et dans laquelle les unités d'entraînement pour les câbles r et ϕ au nombre des sections de toit sont interconnectées.

4. Serre selon l'une quelconque des revendications précédentes, dans laquelle le rapport de la largeur des lentilles de Fresnel dans la direction entre la gouttière et le faîtage sur la distance de ligne focale (foyer) est d'au plus approximativement 0,85, et vaut de préférence entre approximativement 0,66 et 0,82, alors que de préférence les lentilles de Fresnel sont constituées, au moins dans la direction entre la gouttière et le faîtage, d'un nombre d'éléments formés au moyen de filières de moulage, dans laquelle les lentilles de Fresnel sont constituées d'un nombre de paires d'éléments qui sont agencés en symétrie axiale par rapport à l'axe de symétrie de la lentille de Fresnel, et dans laquelle les lentilles de Fresnel peuvent être pourvues de rainures sur le côté de la lentille qui pointe vers le haut, alors que les lentilles de Fresnel sont de préférence disposées entre des feuilles de verre d'une vitre, dans laquelle un nombre d'éléments d'une lentille de Fresnel peut être disposé entre deux feuilles de verre, lesquels éléments sont pourvus, au moins au niveau du bord supérieur et du bord inférieur, d'une surface d'appui s'étendant transversalement à l'élément, laquelle surface d'appui s'étend de préférence vers le côté de dessous et le côté supérieur et dans laquelle les éléments peuvent être formés par moulage par injection, et qui peuvent être ménagés au niveau des bords de ceux-ci, de préférence à proximité des coins, avec des éléments d'empilement, tels que des jambes saillantes, sur au moins un côté pour coopération avec les surfaces d'appui, alors que les lentilles de Fresnel sont de préférence constituées d'un nombre d'éléments, vus dans la direction parallèle à la surface d'appui, et les éléments des lentilles de Fresnel sont ménagés au niveau de leurs bords latéraux opposés avec des éléments de connexion à verrouillage de forme, de telle sorte que, vus dans la direction parallèle au faîtage, des éléments adjacents les uns aux autres sont interconnectés de telle manière à être résistants à un effort de traction.

5. Serre selon l'une quelconque des revendications précédentes, dans laquelle les fenêtres à air au niveau de la plateforme septentrionale sont configurées comme des fenêtres à guillotine, dans laquelle de préférence l'unité d'entraînement pour les fenêtres à air est attachée à la plateforme septentrionale, et dans laquelle la plateforme septentrionale peut être pourvue d'un cache-pluie (transparent) en un emplacement au-dessus de l'ouverture des fenêtres à guillotine, lequel cache-pluie penche vers le bas depuis la plateforme septentrionale, selon un angle par rapport à ladite plateforme septentrionale, vers une extrémité libre, et dans laquelle le cache-pluie peut être incurvé et l'angle que le cache-pluie fait avec la plateforme septentrionale augmente dans la direction de l'extrémité libre, pendant que l'angle que la plateforme méridionale fait avec l'horizontale peut varier entre 10° et 40°, de préférence qui est d'approximativement 30°, et la plateforme septentrionale s'étend au moins sensiblement perpendiculairement à celle-ci.

6. Serre selon l'une quelconque des revendications précédentes, dans laquelle les éléments d'absorption sont pourvus d'un nombre de modules PV comprenant des cellules PV, dans laquelle les cellules PV au sein d'un module PV sont de préférence connectées en parallèle et les modules PV adjacents sont connectés en série, dans laquelle les éléments d'absorption peuvent comprendre des sections de support qui sont soudées ensemble *in situ,* sections de support sur lesquelles les modules PV sont placés, de préférence à l'aide de bandes adhésives, et dans laquelle les cellules PV adjacentes au sein d'un module PV peuvent être pourvues de bornes de connexion faisant saillie transversalement à la longueur des modules PV, dans laquelle des modules PV adjacents sont agencés selon une relation alternée, de telle sorte que dans le cas de modules PV adjacents, les bornes plus d'un module PV font saillie vers le même côté des bornes moins associées de l'autre module PV, et qu'un conducteur de courant s'étendant entre la longueur de deux modules PV adjacents soit connecté à toutes les bornes des modules adjacents qui appartiennent à un côté et qui dépassent vers celui-ci, par suite de quoi les modules PV sont connectés en série avec faculté de conduction, dans laquelle les conducteurs de courant peuvent être attachés aux modules PV au moyen de sections à clipser, de préférence dans laquelle chaque borne et le conducteur de courant sont bridés l'un contre l'autre au moyen desdites sections à clipser, et dans laquelle les sections à clipser peuvent être pourvues d'éléments de pression pour maintenir les conducteurs de courant en contact avec les bornes, dans laquelle de préférence au moins un nombre des modules PV affichent une forme parallèle, à l'emplacement des bords en regard, laquelle forme s'écarte d'une ligne perpendiculaire, par exemple en ce que lesdits modules sont coupés à l'oblique dans une direction mutuellement parallèle.

7. Serre selon l'une quelconque des revendications précédentes, dans laquelle les éléments d'absorption sont pourvus sur l'un ou l'autre de leur côté d'éléments diffusant la lumière, tels que du verre diffusant ou des lentilles de Fresnel dans le but de réguler la lumière du jour, et/ou dans laquelle les éléments d'absorption sont pourvus d'un second concentrateur comprenant des miroirs qui réfléchissent la lumière des lentilles de Fresnel vers l'élément d'absorption, lequel second concentrateur peut continuer vers le bas, et qui, si nécessaire, peut coopérer avec les éléments diffusant la lumière, alors que la plateforme septentrionale peut être pourvue de vitres ayant au moins une surface diffuse, et de préférence deux lentilles de Fresnel, et de là deux éléments d'absorption sont ménagés entre la gouttière et le faîtage de la plateforme méridionale, et dans laquelle le rapport de la distance entre la gouttière et le faîtage sur la longueur de la distance focale varie entre 0,6 et 1,1.

8. Structure comprenant au moins une structure de toit (4), laquelle structure de toit comprend au moins une section de toit, dont la plateforme méridionale (5) est pourvue d'au moins deux lentilles de Fresnel (10, 11), en dessous desquelles des éléments d'absorption (12, 13) sont ménagés, lesquels éléments d'absorption sont agencés pour poursuivre la position du soleil avec au moins deux degrés de liberté au moyen d'un mécanisme de déplacement (14) couplé aux éléments d'absorption, lequel mécanisme de déplacement est pourvu de câbles de traction, dans laquelle les éléments d'absorption sont suspendus à des câbles de suspension ajustables (câbles r) (15, 16) qui prolongent les éléments d'absorption, au moins approximativement selon l'axe central des lentilles associées, vers la plateforme méridionale, et, delà, lors d'un ajustement, régulent la distance aux lentilles, pendant qu'au moins un autre câble ajustable (câble ϕ) (17) s'étend vers la plateforme septentrionale et, lorsqu'il est ajusté, régule l'angle ϕ entre la verticale et les câbles r, **caractérisée en ce que** les éléments d'absorption sont combinés en une unité au moyen d'un chaînon rigide (20), et le câble ϕ enclenche ladite unité à un emplacement espacé de l'élément d'absorption qui est situé le plus près de la plateforme septentrionale.
